# EUROPEAN PATENT SPECIFICATION

(11) **EP 3 199 603 B1**
(45) Date of publication and mention of the grant of the patent: **15.04.2020**
(21) Application number: 17153185.8
(22) Date of filing: 26.01.2017
(51) Int. Cl.: C09D 11/328, C09B 67/22, D06P 5/30

(54) **INK JET PRINTING PENETRANT, INK JET PRINTING METHOD, AND INK JET PRINTING APPARATUS**
TINTENSTRAHLDRUCKPENETRATIONSMITTEL, TINTENSTRAHLDRUCKVERFAHREN UND TINTENSTRAHLDRUCKVORRICHTUNG
TÊTE D'IMPRESSION À JET D'ENCRE, PROCÉDÉ D'IMPRESSION À JET D'ENCRE ET APPAREIL D'IMPRESSION À JET D'ENCRE

(30) Priority: 28.01.2016 JP 2016014072
(43) Date of publication of application: 02.08.2017
(73) Proprietor: Seiko Epson Corporation, Tokyo 160-8801 (JP)
(72) Inventor: OKI, Yasuhiro, Suwa-shi, Nagano 392-8502 (JP)
(74) Representative: Miller Sturt Kenyon

(56) References cited:
- EP-A1- 2 463 345
- JP-A- 2011 179 129
- JP-A- 2012 122 029
- JP-A- 2012 122 030
- JP-A- 2012 122 032
- US-A1- 2012 148 807

## Description

### BACKGROUND

### 1. Technical Field

The present invention relates to an ink jet printing penetrant, an ink jet printing method, and an ink jet printing apparatus.

### 2. Related Art

An ink jet printer which forms an image on a recording medium by discharging ink from nozzles toward the recording medium is known. In addition, a technique (also referred to below as "ink jet printing") which performs printing by discharging ink onto a cloth as a recording medium with an ink jet printer is known. Since ink jet printing does not require the creation of a plate which is required in other printing methods such as screen printing, roller printing, rotary screen printing, and transfer printing, it is easy to handle small-lot production of a variety of products and there is also an advantage in that there is less waste liquid.

In ink jet printing, in addition to an ink jet ink composition (also referred to below as "ink") which includes coloring material, an ink jet printing penetrant for promoting the penetration of ink into a cloth is known. For example, JP-A-2011-179129 discloses a technique in which, by attaching an assisting liquid with high permeability on an opposite surface of a printing surface of a cloth and subsequently printing on a printing surface of the cloth by an ink jet method, it is possible to reduce ink bleeding and obtain a cloth where the dyeing density of a pattern does not change in the front and rear.

However, in the technique described above, the penetrant is transparent and it is not possible to carry out discharging checks. Thus, for example, JP-A-2003-105680 discloses a technique which uses a penetrant which contains coloring material which does not dye an ink jet printing cloth in order to perform a discharging check.

However, it is not possible to use the penetrant described above in a case of use for a cloth of a different type of fiber from the disclosed cloth since the cloth is dyed and it is necessary to prepare another penetrant. Thus, the technique described above lacks versatility.

EP 2 463 345 discloses an ink composition at least containing a porphyrazine compound or a salt thereof and an aromatic compound having a carboxy group and/or a salt thereof. Also disclosed is an ink jet recording method using the ink composition and a recorded material recorded by the recording method.

### SUMMARY

An advantage of an aspect of the invention is to provide a use of an ink jet printing penetrant, which makes a discharging check possible for cloths of various types of fibers without losing the dyeing color balance.

According to an aspect of the invention, there is provided a use of a composition as an ink jet printing penetrant in a method for ink jet printing onto cloth as defined in claim 1.

According to the use of the invention, cloths of various types of fiber types are dyed; however, since it is possible to wash the ink jet printing penetrant of the invention off by cleaning, it is possible to provide an ink jet printing penetrant with high versatility which makes a discharging check possible without losing the dyeing color balance.

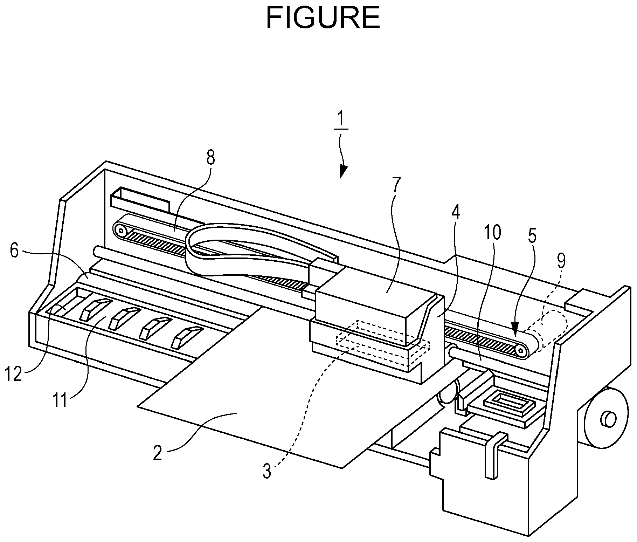

### BRIEF DESCRIPTION OF THE DRAWING

The invention will be described by way of example only with reference to the accompanying drawing.

The figure is a schematic perspective view of an ink jet printing apparatus according to an embodiment.

### DESCRIPTION OF EXEMPLARY EMBODIMENTS

Description will be given below of some embodiments of the invention. The embodiments which will be described below describe an example of the invention. The invention is not limited to the embodiments below and also includes various types of modified embodiments which are realized within a range which does not change the scope of the invention as defined by the claims. Here, not all of the configuration which will be described below is essential to the configuration of the invention.

### 1. Ink Jet Printing Penetrant

The ink jet printing penetrant of the present embodiment (also simply referred to below as a "penetrant") is an ink jet printing penetrant which contains a first dye which is represented by Formula (1) described below or a second dye which is represented by Formula (2) described below as a dye. 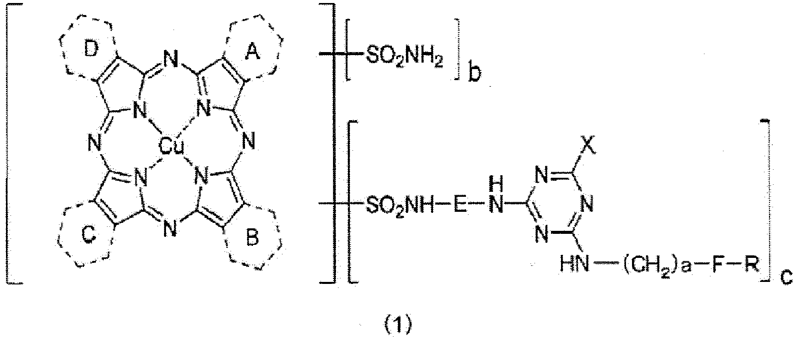 (In Formula (1), rings A to D which are shown by dashed lines each independently represent a 6-membered ring that is either a benzene ring which is condensed in a porphyrazine ring or a nitrogen-containing hetero aromatic ring, a number of nitrogen-containing hetero aromatic rings among rings A to D exceeds 0.00 and is 3.00 or less as an average value, the remaining rings of rings A to D are benzene rings, E represents C2 to C12 alkylene, X is a sulfo anilino group, a carboxyanilino group, a phosphonoanilino group, a sulfonaphthyl amino group, a carboxynaphthyl amino group, or a phosphononaphthyl amino group which may have one type or two or more types of substituents selected from the group formed of a sulfo group, a carboxy group, a phosphoric acid group, a sulfamoyl group, a carbamoyl group, a hydroxy group, a C1 to C6 alkoxy group, an amino group, a mono C1 to C4 alkyl amino group, a di C1 to C4 alkyl amino group, a mono C6 to C10 aryl amino group, a di C6 to C10 aryl amino group, a C1 to C3 alkyl carbonyl amino group, a ureido group, a C1 to C6 alkyl group, a nitro group, a cyano group, a halogen atom, a C1 to C6 alkyl sulfonyl group, and a C1 to C6 alkyl thio group as a substituent, R represents a hydrogen atom, a sulfo group, a carboxy group, a phosphoric acid group, a sulfamoyl group, a carbamoyl group, a hydroxy group, a C1 to C6 alkoxy group, an amino group, a mono C1 to C6 alkyl amino group, a di C1 to C6 alkyl amino group, a mono aryl amino group, a diaryl amino group, a C1 to C3 alkyl carbonyl amino group, a ureido group, a C1 to C6 alkyl group, a nitro group, a cyano group, a halogen atom, a C1 to C6 alkyl sulfonyl group, and an alkyl thio group, group F represents a phenyl group or a 6-membered nitrogen-containing hetero aromatic ring group, a represents an integer of 1 to 6, b is 0.00 or more and less than 3.90 as an average value, c is 0.10 or more and less than 4.00 as an average value, and a total of b and c is 1.00 or more and less than 4.00 as an average value.) 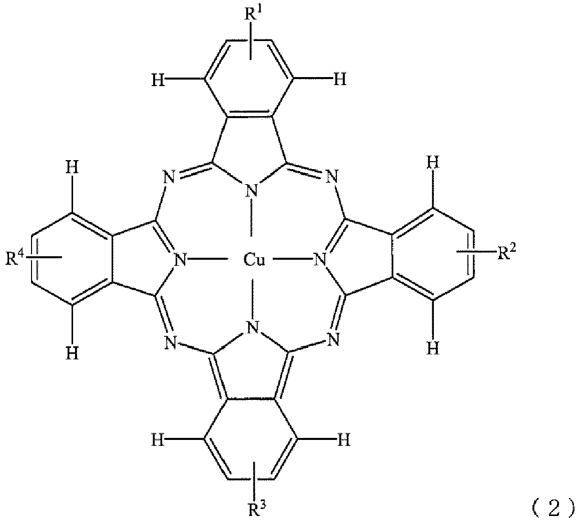 (In Formula (2), R¹ to R⁴ each independently represent SO₂Z. Z each independently represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group.)

Description will be given below of each component which is included in the penetrant according to the present embodiment.

### 1.1. First Dye represented by Formula (1)

The ink jet printing penetrant according to the present embodiment contains a first dye which is represented by Formula (1) described above or a second dye which is represented by Formula (2) described above as a dye. The first dye which is represented by Formula (1) described above may be a salt and detailed description will be given below of the first dye which is represented by Formula (1), that is, a porphyrazine-based compound or a salt thereof. Here, in the present specification, for convenience, the above will be described below simplified as a "porphyrazine-based compound" including both a "porphyrazine-based compound or a salt thereof".

Regarding the porphyrazine-based compound which is used in the invention, more than 0 and 3 or less of four benzo (benzene) rings of tetrabenzo porphyrazine (generally called phthalocyanine) are substituted with nitrogen-containing hetero aromatic rings.

In Formula (1) described above, examples of nitrogen-containing hetero aromatic rings in rings A to D which are shown by dashed lines (four rings of rings A, B, C, and D) include a nitrogen-containing hetero aromatic ring which includes 1 or 2 nitrogen atoms of a pyridine ring, a pyrazine ring, a pyrimidine ring, a pyridazine ring, and the like. Among these, a pyridine ring or a pyrazine ring is preferable, and a pyridine ring is more preferable. The ozone resistance is improved as the number of the nitrogen-containing hetero aromatic rings increases; however, there is a tendency for the bronze property to be easily generated and it is sufficient if a well-balanced ratio is selected by appropriately adjusting the number of the nitrogen-containing hetero aromatic rings while considering the ozone resistance and the bronze property.

Since the number of the nitrogen-containing hetero aromatic rings depends on the type of the hetero ring, it is not possible to make a generalization; however, the average value normally exceeds 0.00 and is 3.00 or less, preferably within the range of 0.20 to 2.00, more preferably 0.50 to 1.75, and even more preferably 0.75 to 1.50.

The remaining rings A to D are benzene rings and the average value of the benzene rings in rings A to D is normally 1.00 or more and less than 4.00, preferably 2.00 to 3.80, more preferably 2.25 to 3.50, and even more preferably 2.50 to 3.25 in the same manner. Here, the porphyrazine-based compound which is used in the invention is a mixture of a plurality of compounds as is clear from the number of the nitrogen-containing hetero aromatic rings of rings A to D being represented by an average value.

In addition, unless otherwise stated in the present specification, the number of the nitrogen-containing hetero aromatic rings is described up to the second digit by rounding off the third digit after the decimal point. However, for example, when the number of the nitrogen- containing hetero aromatic rings is 1.375 and the number of the benzene rings is 2.625, the former is 1.38 and the latter is 2.63 when rounding off both and the total of both exceeds 4.00 which is the total of the rings A to D. In this case, for convenience, by omitting the third digit after the decimal point on the nitrogen-containing hetero aromatic ring side and only rounding off on the benzene ring side, description will be given with the former as 1.37 and the latter as 2.63. In addition, also regarding b and c in Formula (1), as will be described below, as a general rule, description will be given up to the second digit by rounding off the third digit after the decimal point; however, in a similar case, description will be given in which the third digit after the decimal point on the b side is left out and only the C side is rounded off.

In Formula (1) described above, examples of alkylene in E include a straight-chain, a branched-chain, or a cyclic alkylene and a straight-chain or a cyclic form is preferable, and a straight-chain is more preferable. The range of the number of carbon atoms is generally C2 to C12, preferably C2 to C6, more preferably C2 to C4, and even more preferably C2 or C3.

Specific examples thereof include straight-chain alkylenes such as ethylene, propylene, butylene, pentylene, hexylene, heptylene, octylene, nonylene, decylene, undecylene, and dodecylene; branched-chain alkylenes such as 2-methylethylene; cyclic form alkylenes such as cyclopropylenediyl, 1,2- or 1,3-cyclopentylenediyl, and each cyclohexylenediyl such as 1,2-, 1,3-, 1,4-, or the like; and the like. Ethylene, propylene, butylene, pentylene, or hexylene is preferable, ethylene, propylene, or butylene is more preferable, ethylene or propylene is even more preferable, and ethylene is particularly preferable.

In Formula (1) described above, X represents a sulfo anilino group, a carboxyanilino group, a phosphonoanilino group, a sulfonaphthyl amino group, a carboxynaphthyl amino group, or a phosphononaphthyl amino group. The substituted number of the sulfo, carboxy, and phosphono in these anilino groups and naphthyl amino groups is 1 in all cases.

Specific examples thereof include sulfo anilino groups such as 2-sulfo anilino, 3-sulfo anilino, and 4-sulfo anilino; carboxyanilino groups such as 2-carboxyanilino, 3-carboxyanilino, and 4-carboxyanilino; phosphonoanilino groups such as 2-phosphonoanilino, 3-phosphonoanilino, and 4-phosphonoanilino; sulfonaphthyl amino groups such as 3-sulfo-1-naphthyl amino, 6-sulfo-1-naphthyl amino, 8-sulfo-1-naphthyl amino, 1-sulfo-2-naphthyl amino, 3-sulfo-2-naphthyl amino, 4-sulfo-2-naphthyl amino, 5-sulfo-2-naphthyl amino, 6-sulfo-2-naphthyl amino, 7-sulfo-2-naphthyl amino, and 8-sulfo-2-naphthyl amino; and the like.

Here, "phosphono" has the meaning of a phosphoric acid group [-P(O)(OH)₂]. The X is preferably a sulfo anilino group, a carboxyanilino group, a phosphonoanilino group, or a sulfonaphthyl amino group and particularly preferably a sulfo anilino group.

In X, the sulfo anilino group, the carboxyanilino group, the phosphonoanilino group, the sulfonaphthyl amino-group, the carboxynaphthyl amino group, or the phosphononaphthyl amino group further has one type or two or more types of groups selected from the group formed of a sulfo group, a carboxy group, a phosphoric acid group, a sulfamoyl group, a carbamoyl group, a hydroxy group, a C1 to C6 alkoxy group, an amino- group, a mono C1 to C4 alkyl amino group, a di C1 to C4 alkyl amino group, a mono aryl amino group, a diaryl amino group, a C1 to C3 alkyl carbonyl amino group, a ureido group, a C1 to C6 alkyl group, a nitro group, a cyano group, a halogen atom, a C1 to C6 alkyl sulfonyl group, and a C1 to C6 alkyl thio group as a substituent. The group of 20 groups from the sulfo group to the C1 to C6 alkyl thio group which are given here are described simplified as a "group of 20 substituents" in the present specification. The substituted number in X of a group which is selected from the group of the 20 substituents is normally 0 to 4, preferably 0 to 3, more preferably 0 to 2, and even more preferably 0 or 1. The substituted position of the group which is selected from the group of the 20 substituents is not particularly limited; however, it is preferable to substitute carbon atoms in the anilino group and the naphthyl amino group, that is, on a benzene ring when the former and on a naphthalene ring when the latter.

Examples of the C1 to C6 alkoxy group in the group of the 20 substituents include a straight-chain alkoxy group, a branched-chain alkoxy group, or a cyclic form alkoxy group. A straight-chain alkoxy group or a branched-chain alkoxy group is preferable, and a straight-chain alkoxy group is more preferable.

The range of the number of carbon atoms is generally C1 to C6, preferably C1 to C4, and more preferably C1 to C3.

Specific examples thereof include straight-chain alkoxy groups such as methoxy, ethoxy, n-propoxy, n-butoxy, n-pentoxy, and n-hexyloxy; a branched-chain such as isopropoxy, isobutyoxy, sec-butoxy, t-butoxy, isopentyloxy, and isohexyloxy; a cyclic form such as cyclopropoxy, cyclopentoxy, and cyclohexyloxy. Out of these, methoxy or ethoxy is preferable, and methoxy is particularly preferable.

Examples of the mono C1 to C4 alkyl amino group in the group of the 20 substituents include a straight-chain group or a branched-chain group and the range of the number of carbon atoms thereof is generally C1 to C4 and preferably C1 to C3. Specific examples thereof include straight-chain groups such as methyl amino, ethyl amino, n-propyl amino, and n-butyl amino; branched-chain groups such as isopropyl amino, isobutyl amino, sec-butyl amino, and t-butyl amino; and the like. Among these, methyl amino is preferable.

Examples of the di C1 to C4 alkyl amino group in the group of the 20 substituents include a dialkyl amino group which independently has two alkyl portions which are exemplified in the monoalkyl amino group. Specific examples thereof include dimethyl amino, diethyl amino, methyl ethyl amino, and the like. Among these, dimethyl amino is preferable.

Examples of the mono aryl amino group in the group of the 20 substituents include a mono C6 to C10 aromatic amino group, preferably a phenyl amino group or a naphthyl amino group, and more preferably a phenyl amino group.

Examples of the diaryl amino group in the group of the 20 substituents include a diaryl amino group which independently has two aryls which are exemplified in the mono aryl amino group. Preferable examples thereof include the same aryls, more preferable examples thereof include a group which has two phenyls, and specific examples thereof include diphenyl amino.

Examples of the C1 to C3 alkyl carbonyl amino group in the group of the 20 substituents include a straight-chain or a branched-chain and a straight-chain is preferable. Specific examples thereof include straight-chain groups such as methyl carbonyl amino (acetyl amino), ethyl carbonyl amino, and n-propyl carbonyl amino; and branched-chain groups such as isopropyl carbonyl amino. Among these, acetyl amino is preferable.

Examples of the C1 to C6 alkyl group in the group of the 20 substituents include a straight-chain, a branched-chain, or a cyclic C1 to C6, preferably C1 to C4, more preferably C1 to C3 alkyl group. Among these, a straight-chain or a branched-chain group is preferable, and a straight-chain group is more preferable. Specific examples thereof include a straight-chain such as methyl, ethyl, n-propyl, n-butyl, n-pentyl, and n-hexyl; a branched-chain such as isopropyl, isobutyl, sec-butyl, t-butyl, isopentyl, and isohexyl; a cyclic form such as cyclopropyl, cyclopentyl, and cyclohexyl; and the like. Among these, methyl is preferable.

Examples of the halogen atom in the group of the 20 substituents include a fluorine atom, a chlorine atom, and a bromine atom, and a fluorine atom or a chlorine atom is preferable, and a chlorine atom is more preferable.

Examples of the C1 to C6 alkyl sulfonyl group in the group of the 20 substituents include a straight-chain or a branched-chain C1 to C6, preferably C1 to C4, more preferably C1 to C3 alkyl sulfonyl group. A straight-chain group is preferable. Specific examples thereof include straight-chain groups such as methane sulfonyl (methyl sulfonyl), ethane sulfonyl (ethyl sulfonyl), n-propane sulfonyl (n-propyl sulfonyl), n-butyl sulfonyl, n-pentyl sulfonyl, and n-hexyl sulfonyl; and branched-chain groups such as isopropyl sulfonyl and isobutyl sulfonyl. Among these, methyl sulfonyl is preferable.

Examples of the C1 to C6 alkyl thio group in the group of 20 substituents include a straight-chain or a branched-chain C1 to C6, preferably C1 to C4, more preferably C1 to C3 alkyl thio group. A straight-chain group is preferable. Specific examples thereof include straight-chain groups such as methyl thio, ethyl thio, n-propyl thio, n-butyl thio, n-pentyl thio, and n-hexyl thio; and branched-chain groups such as isopropyl thio, isobutyl thio, t-butyl thio, isopentyl thio, and isohexyl thio. Among these, methyl thio is preferable.

When X is a sulfo anilino group, out of the group of the 20 substituents, a sulfo group, a carboxy group, a hydroxy group, a C1 to C6 alkoxy group, an amino group, a mono C1 to C4 alkyl amino group, a di C1 to C4 alkyl amino group, a C1 to C3 alkyl carbonyl amino group, a C1 to C6 alkyl group, a nitro group, a halogen atom, a C1 to C6 alkyl sulfonyl group, and a C1 to C6 alkyl thio group are preferable, and a sulfo group is particularly preferable.

When X is a carboxyanilino group, out of the group of the 20 substituents, a sulfo group, a carboxy group, a hydroxy group, and a sulfamoyl group are preferable.

When X is a phosphonoanilino group, X preferably does not have a group selected from the group of the 20 substituents.

When X is a sulfonaphthyl amino group, out of the group of the 20 substituents, a sulfo group and a hydroxy group are preferable.

When X is a carboxynaphthyl amino group or a phosphononaphthyl amino group, X preferably does not have a group selected from the group of the 20 substituents.

Specific examples of X in Formula (1) described above include an example where a sulfo anilino group such as 2-sulfo anilino, 3-sulfo anilino, 4-sulfo anilino, 2,4-sulfo anilino, and 2,5-sulfo anilino further has 0 or 1 sulfo group; an example where a sulfo anilino group such as 2-carboxy 4-sulfo anilino and 2-carboxy-5-sulfo anilino further has one carboxy group (or an example where a carboxyanilino group further has one sulfo group); an example where a sulfo anilino group such as 4-methoxy-2-sulfo anilino, 4-ethoxy-2-sulfo anilino, and 4-ethoxy-6-sulfo anilino further has one C1 to C6 alkoxy group; an example where a sulfo anilino group such as 3-amino-4-sulfo anilino further has one amino group; an example where a sulfo anilino group such as 4-methyl amino-5-sulfo anilino further has one mono C1 to C4 alkyl amino group; an example where a sulfo anilino group such as 4-dimethyl amino-5-sulfo anilino further has one di C1 to C4 alkyl amino group; an example where a sulfo anilino group such as 2-methyl-5-sulfo anilino and 3-methyl-6-sulfo anilino further has one C1 to C6 alkyl group; an example where a sulfo anilino group such as 4-anilino-3-sulfo anilino further has one aryl amino group; an example where a sulfo anilino group such as 4-acetyl amino-2-sulfo anilino further has one C1 to C3 alkyl carbonyl amino group; an example where a sulfo anilino group such as 2-chloro-5-sulfo anilino and 3,5-dichloro-4-sulfo anilino further has 1 or 2 halogen atoms; an example where a sulfo anilino group such as 4-methyl sulfonyl-2-sulfo anilino, 4-methyl sulfonyl-5-sulfo anilino, and 4-hexyl sulfonyl-2-sulfo anilino further has one C1 to C6 alkyl sulfonyl group; an example where a sulfo anilino group such as 4-methyl thio-2-sulfo anilino and 4-hexyl thio-2-sulfo anilino further has one C1 to C6 alkyl thio group; an example where a sulfo anilino group such as 3-carboxy-4-hydroxy-5-sulfo anilino, 2-hydroxy-5-nitro-3-sulfo anilino, 2-methoxy-4-nitro-5-sulfo anilino, 3-methyl-6-methoxy-4-sulfo anilino, and 2-hydroxy-3-acetyl amino-5-sulfo anilino further has two groups of two types selected from the group of the 20 substituents; an example where a carboxyanilino group such as 2-carboxyanilino, 3-carboxyanilino, 4-carboxyanilino, and 3,5-dicarboxyanilino further has 0 or 1 carboxy group; an example where a carboxyanilino group such as 4-sulfamoyl-2-carboxyanilino further has one sulfamoyl group; an example where a carboxyanilino group such as 3-carboxy 4-hydroxyanilino further has one hydroxy group; an example where a carboxyanilino group such as 4-hydroxy-3-sulfo 5-carboxyanilino further has two groups of two types selected from the group of the 20 substituents; a phosphonoanilino group such as 2-phosphonoanilino, 3-phosphonoanilino, and 4-phosphonoanilino; an example where a sulfonaphthyl amino group such as 4,8-disulfo-2-naphthyl amino, 1,5-disulfo-2-naphthyl amino, 3,6-disulfo-1-naphthyl amino, 5,7-disulfo-2-naphthyl amino, 6,8-disulfo-2-naphthyl amino, 3,6,8-trisulfo-1-naphthyl amino, and 3,6,8-trisulfo-2-naphthyl amino further has 1 or 2 sulfo groups; an example where a sulfonaphthyl amino group such as 5-hydroxy-7-sulfo-2-naphthyl amino further has one hydroxy group; and an example where a sulfonaphthyl amino group such as 3,6-disulfo-8-hydroxy-1-naphthyl amino, 8-chloro-3,6-disulfonaphthalene-1-il amino, and 6-nitro-4,8-disulfo-2-naphthyl amino further has two groups of two types selected from the group of the 20 substituents.

Out of these, 2-sulfo anilino, 3-sulfo anilino, 4-sulfo anilino, 2,4-disulfo anilino, 2,5-disulfo anilino, 3,6-disulfo-1-naphthyl amino, 5,7-disulfo-2-naphthyl amino, 6,8-disulfo-2-naphthyl amino, and 3,6,8-trisulfo-1-naphthyl amino are preferable, 4-sulfo anilino, 2,5-disulfo anilino, or 3,6,8-trisulfo-1-naphthyl amino are more preferable, and 2,5-disulfo anilino is even more preferable.

In Formula (1), R represents a hydrogen atom, a sulfo group, a carboxy group, a phosphoric acid group, a sulfamoyl group, a carbamoyl group, a hydroxy group, a C1 to C6 alkoxy group, an amino group, a mono C1 to C6 alkyl amino group, a di C1 to C6 alkyl amino group, a mono C6 to C10 aryl amino group, a di C6 to C10 aryl amino group, a C1 to C3 alkyl carbonyl amino group, a ureido group, a C1 to C6 alkyl group, a nitro group, a cyano group, a halogen atom, a C1 to C6 alkyl sulfonyl group, or an alkyl thio group.

Examples of the C1 to C6 alkoxy group in R include a straight-chain group, a branched-chain group, or a cyclic C1 to C6, preferably C1 to C4, more preferably C1 to C3 alkoxy group. A straight-chain or a branched-chain group is preferable, and a straight-chain group is more preferable. Specific examples thereof include straight-chain groups such as methoxy, ethoxy, n-propoxy, n-butoxy, n-pentoxy, and n-hexyloxy; branched-chain groups such as isopropoxy, isobutoxy, sec-butoxy, t-butoxy, isopentyloxy, and isohexyloxy; and cyclic form groups such as cyclopropoxy, cyclopentoxy, and cyclohexyloxy. Among these, methoxy or ethoxy is preferable, and methoxy is particularly preferable.

Examples of the mono C1 to C4 alkyl amino group in R include a straight-chain or a branched-chain group and the range of the number of carbon atoms thereof is generally C1 to C4 and preferably C1 to C3. Specific examples thereof include straight-chain groups such as methyl amino, ethyl amino, n-propyl amino, and n-butyl amino; and branched-chain groups such as isopropyl amino, isobutyl amino, sec-butyl amino, and t-butyl amino.

Examples of the di C1 to C4 alkyl amino group in R include a dialkyl amino group which independently has two alkyl portions which were exemplified in the monoalkyl amino group. Specific examples thereof include dimethyl amino, diethyl amino, methyl ethyl amino, and the like.

Examples of the mono C6 to C10 aryl amino group in R include a mono C6 to C10 aromatic amino group, preferably a phenyl amino group or a naphthyl amino group, and more preferably a phenyl amino group.

Examples of the di C6 to C10 aryl amino group in R include a diaryl amino group which independently has two aryls which were exemplified in the mono aryl amino group. Preferable examples thereof include the same aryls, more preferable examples thereof include one which has two phenyls, and specific examples thereof include diphenyl amino.

Examples of the C1 to C3 alkyl carbonyl amino group in R include a straight-chain or a branched-chain group and a straight-chain group is preferable. Specific examples thereof include straight-chain groups such as methyl carbonyl amino (acetyl amino), ethyl carbonyl amino, and n-propyl carbonyl amino; and branched-chain groups such as isopropyl carbonyl amino.

Examples of the C1 to C6 alkyl group in R include a straight-chain group, a branched-chain group, or a cyclic C1 to C6, preferably C1 to C4, and more preferably C1 to C3 alkyl group. A straight-chain or a branched-chain group is preferable, and a straight-chain group is more preferable. Specific examples thereof include straight-chain groups such as methyl, ethyl, n-propyl, n-butyl, n-pentyl, and n-hexyl; branched-chain groups such as isopropyl, isobutyl, sec-butyl, t-butyl, isopentyl, and isohexyl; and cyclic form groups such as cyclopropyl, cyclopentyl, and cyclohexyl. Among these, methyl is preferable.

Examples of the halogen atom in R include a fluorine atom, a chlorine atom, and a bromine atom. A fluorine atom or a chlorine atom is preferable, and a chlorine atom is more preferable.

Examples of the C1 to C6 alkyl sulfonyl group in R include a straight-chain or a branched-chain C1 to C6, preferably C1 to C4, and more preferably C1 to C3 alkyl sulfonyl group. A straight-chain group is preferable. Specific examples thereof include straight-chain groups such as methane sulfonyl (methyl sulfonyl), ethane sulfonyl (ethyl sulfonyl), n-propane sulfonyl (n-propyl sulfonyl), n-butyl sulfonyl, n-pentyl sulfonyl, and n-hexyl sulfonyl; and a branched-chain such as isopropyl sulfonyl and isobutyl sulfonyl.

Examples of the C1 to C6 alkyl thio group in R include a straight-chain or a branched-chain C1 to C6, preferably C1 to C4, and more preferably C1 to C3 alkyl thio group. A straight-chain group is preferable. Specific examples thereof include straight-chain groups such as methyl thio, ethyl thio, n-propyl thio, n-butyl thio, n-pentyl thio, and n-hexyl thio; and branched-chain groups such as isopropyl thio, isobutyl thio, t-butyl thio, isopentyl thio, and isohexyl thio.

In Formula (1), group F represents a phenyl group or a 6-membered nitrogen-containing hetero aromatic ring group. Examples of the 6-membered nitrogen-containing hetero aromatic ring group include a nitrogen-containing hetero aromatic ring group which includes one nitrogen atom. Specific examples thereof include pyridyl.

In the 6-membered nitrogen-containing hetero aromatic ring, the bonding position with alkylene of which the number is represented by "a" is not particularly limited; however, it is preferable to bond with a carbon atom which is adjacent to a nitrogen atom. That is, when group F is pyridyl, examples thereof include 2-pyridyl, 3-pyridyl, and 4-pyridyl setting the substituted position of the nitrogen atom as the first position, and a group which bonds with a carbon atom which is adjacent to a nitrogen atom, that is, 2-pyridyl, is preferable.

In Formula (1), when group F is a phenyl group, in R, a hydrogen atom, a sulfo group, a carboxy group, a C1 to C6 alkoxy group, a C1 to C6 alkyl group, and a halogen atom are preferable, a hydrogen atom, a sulfo group, a carboxy group, a methoxy group, a methyl group, a fluorine atom, and a chlorine atom are more preferable, and a hydrogen atom, a sulfo group, and a carboxy group are even more preferable.

In Formula (1), when group F is a 6-membered nitrogen-containing hetero aromatic ring group, in R, a hydrogen atom or a halogen atom is preferable, and a hydrogen atom is particularly preferable.

In Formula (1), the substituted position of R in group F is not particularly limited. When group F is a phenyl group, a bonding position with "(CH₂)a" is set as a first position and examples of the substituted position of R include a second position, a third position, or a fourth position, and a fourth position is preferable.

In addition, when group F is a 6-membered nitrogen-containing hetero aromatic ring group, preferably pyridyl, a nitrogen atom of a pyridine ring is set as a first position and examples of the bonding position of "(CH₂)a" and R include a combination of the former being at a second position and the latter being at a third position, a fourth position, a fifth position, or a sixth position, and a combination of the former being at a second position and the latter being at a fourth position is preferable.

In Formula (1), a represents the repeating number of "(CH₂)", that is, the length of alkylene, and is generally an integer of 1 to 6, preferably 1 to 4, more preferably 1 to 3, even more preferably 1 or 2, and particularly preferably an integer of 1.

b, c and the total of b and c in Formula (1) are each an average value. b is 0.00 or more and less than 3.90, c is 0.10 or more and less than 4.00, and the total of b and c is 1.00 or more and less than 4.00 as an average value. At this time, the nitrogen-containing hetero aromatic ring number in the rings A to D exceeds 0.00 and is 3.00 or less as an average value, and the benzene ring number is 1.00 or more and less than 4.00 in the same manner.

Preferably, when the nitrogen-containing hetero aromatic ring number in A to D is 0.20 to 2.00 and the benzene ring number is 2.00 to 3.80, b is 0.00 to 3.40, c is 0.40 to 2.00, and the total of b and c is 2.00 to 3.80. More preferably, when the nitrogen-containing hetero aromatic ring number in the rings A to D is 0.50 to 1.75 and the benzene ring number is 2.25 to 3.50, b is 0.35 to 3.05, c is 0.45 to 1.90, and the total of b and c is 2.25 to 3.50.

Even more preferably, when the nitrogen-containing hetero aromatic ring number in the rings A to D is 0.75 to 1.50 and the benzene ring number is 2.50 to 3.25, b is 0.70 to 2.75, c is 0.50 to 1.80, and the total of b and c is 2.50 to 3.25. There is a tendency for the ozone resistance to improve as c and b increase; however, there is a tendency for bronze to be easily generated and it is sufficient if a well-balanced ratio is selected by appropriately adjusting the number of b and c while considering the ozone resistance and the bronze property.

Here, in a case where the rings A to D are benzene rings, both an unsubstituted sulfamoyl group and a substituted sulfamoyl group of which the substituted number is represented by b and c respectively are a group which is substituted on the benzene ring, and not substituted in a case where the rings A to D are 6-membered nitrogen-containing hetero aromatic rings.

Here, in the present specification, b, c and the total of b and c are each described up to the second digit by rounding off the third digit after the decimal point.

In the rings A to D, E, X, R, group F, a, b, and c described above, a porphyrazine-based compound formed by combining preferable parts is more preferable, and a porphyrazine-based compound formed by combining more preferable parts is even more preferable. The same also applies to a combination of even more preferable parts, a combination of a preferable part and a more preferable part, and the like.

The porphyrazine-based compound which is represented by Formula (1) is also able to form a salt using sulfo, carboxy, phosphono, and the like which are included in the molecule. When forming a salt, the counter cation thereof preferably forms a salt with each cation of inorganic metal, ammonia (NH₃), or an organic salt group.

Examples of the inorganic metal include alkali metal or alkali earth metal. Examples of the alkali metal include lithium, sodium, and potassium. Examples of the alkali earth metal include calcium and magnesium.

Examples of the organic salt group particularly include organic amines and examples thereof include C1 to C3 alkyl amines such as methyl amine and ethyl amine, and mono-, di-, or tri- C1 to C4 alkanol amines such as monoethanol amine, diethanol amine, and triethanol amine.

Among salts which use counter cations of the above, preferable examples include alkali metal salts such as sodium, potassium, and lithium; salts with mono-, di-, or tri- C1 to C4 alkanol amines such as monoethanol amine, diethanol amine, triethanol amine, monoisopropanol amine, diisopropanol amine, and triisopropanol amine, and ammonium salts; however, the invention is not limited thereto.

In addition, regarding the salt of the porphyrazine-based compound which is used in the invention, there are also cases where the physical property such as the solubility, and the performance of a penetrant in a case of being used as a penetrant change according to the type of the salt. For this reason, it is preferable that the type of salt also be selected according to the desired performance of the penetrant.

A particularly preferable compound as the porphyrazine-based compound which is represented by Formula (1) or the salt thereof is a compound which has a combination of (i) to (vi) described below.
(i) The nitrogen-containing hetero aromatic rings in the rings A to D are preferably each independently a pyridine ring which is condensed at a second position and a third position or at a third position and a fourth position or a pyrazine ring which is condensed at a second position and a third position.
(ii) E is preferably a straight-chain C2 to C4 alkylene.
(iii) X is preferably a sulfo anilino group which may have 0 to 2 substituents of one type or two types selected from the group formed of a sulfo group, a carboxy group, a hydroxy group, a C1 to C6 alkoxy group, an amino group, a mono C1 to C4 alkyl amino group, a di C1 to C4 alkyl amino group, a C1 to C3 alkyl carbonyl amino group, a nitro group, a halogen atom, a C1 to C6 alkyl sulfonyl group, and an alkyl thio group as a substituent; a carboxyanilino group which may have 0 to 2 substituents of one type or two types selected from the group formed of a sulfo group, a carboxy group, a hydroxy group, and a sulfamoyl group as a substituent; a phosphonoanilino group; or a sulfonaphthyl amino group which may have 0 to 2 substituents of one type or two types selected from the group formed of a sulfo group and a hydroxy group as a substituent.
(iv) R is preferably a hydrogen atom, a sulfo group, a carboxy group, a C1 to C6 alkoxy group, a C1 to C6 alkyl group, or a halogen atom.
(v) Group F is preferably a phenyl group or a pyridyl group where R is a hydrogen atom.
(vi) a is preferably 1 or 2.

Specific examples of the rings A to D, E, X, R, and group F in the porphyrazine-based compound which is represented by Formula (1) and which is used in the invention and the numbers of a, b, and c are shown in Table 1 below.

Here, the examples below show representative examples in order to specifically describe the porphyrazine-based compound which is used in the invention and the invention is not limited to the examples below.

In addition, when the nitrogen-containing hetero aromatic ring in the rings A to D is a pyridine ring, an isomer of a nitrogen atom as will be described below is present and is obtained as a mixture of isomers when synthesizing a porphyrazine-based compound. These isomers are difficult to separate and moreover, identifying the isomers by analysis is also difficult. For this reason, the above are generally used as a mixture. The porphyrazine-based compound which is used in the invention also includes such a mixture. In the present specification, in a case of display using a structural formula without distinguishing the isomers, one representative structural formula is described for convenience. Here, regarding the numbers of b and c in the table, description will be given up to the first digit by rounding off the second digit after the decimal point in order to avoid complication. Here, in Tables 1 to 4, "2,3-pyride" has the meaning of a pyridine ring which is condensed in the porphyrazine ring at a second position and a third position, "benzo" has the meaning of a benzene ring which is condensed in the porphyrazine ring, and "2-pyridyl" has the meaning that the bonding position with "(CH₂)a" is a second position with a nitrogen atom of a pyridine ring set as a first position. In addition, regarding "4-chloro" or the like in R, the substituted positions of R are each shown in a case of setting a bonding position with "(CH₂)a" as a first position when group F is a phenyl group and in a case of setting a nitrogen atom of a pyridine ring as a first position when group F is pyridyl.

**Table 1**

| No. | A | B | C | D | E | F | X | R | a | b | c |
|---|---|---|---|---|---|---|---|---|---|---|---|
| 1 | 2,3-pyride | benzo | benzo | benzo | ethylene | phenyl | 2,5-disulfo anilino | H | 1 | 1 | 2 |
| 2 | 2,3-pyride | benzo | benzo | benzo | ethylene | phenyl | 2,4-disulfo anilino | H | 1 | 1 | 2 |
| 3 | 2,3-pyride | benzo | benzo | benzo | ethylene | phenyl | 2-sulfo anilino | H | 1 | 1 | 2 |
| 4 | 2,3-pyride | benzo | benzo | benzo | ethylene | phenyl | 3-sulfo anilino | H | 1 | 1 | 2 |
| 5 | 2,3-pyride | benzo | benzo | benzo | ethylene | phenyl | 4-sulfo anilino | H | 1 | 1 | 2 |
| 6 | 2,3-pyride | benzo | benzo | benzo | ethylene | phenyl | 2,5-disulfo anilino | H | 2 | 1 | 2 |
| 7 | 2,3-pyride | benzo | benzo | benzo | ethylene | phenyl | 2,5-disulfo anilino | H | 3 | 1 | 2 |
| 8 | 2,3-pyride | benzo | benzo | benzo | ethylene | phenyl | 2,5-disulfo anilino | H | 4 | 1 | 2 |
| 9 | benzo | 2,3-pyride | 2,3-pyride | 2,3-pyride | ethylene | phenyl | 2,5-disulfo anilino | H | 1 | 0 | 1 |
| 10 | benzo | 2,3-pyride | 2,3-pyride | benzo | ethylene | phenyl | 2,5-disulfo anilino | H | 1 | 1 | 1 |
| 11 | 2,3-pyride | benzo | benzo | benzo | propylene | phenyl | 2,5-disulfo anilino | H | 1 | 2 | 1 |
| 12 | 2,3-pyride | benzo | 2,3-pyride | benzo | propylene | phenyl | 2,5-disulfo anilino | H | 1 | 1 | 1 |
| 13 | 2,3-pyride | benzo | 2,3-pyride | 2,3-pyride | propylene | phenyl | 2,5-disulfo anilino | H | 1 | 0 | 1 |
| 14 | 2,3-pyride | benzo | benzo | benzo | ethylene | phenyl | 2-sulfo anilino | 4-sulfo | 1 | 1 | 2 |
| 15 | 2,3-pyride | benzo | benzo | benzo | ethylene | phenyl | 3-sulfo anilino | 4-sulfo | 1 | 1 | 2 |
| 16 | 2,3-pyride | benzo | benzo | benzo | ethylene | phenyl | 4-sulfo anilino | 4-sulfo | 1 | 1 | 2 |
| 17 | benzo | 2,3-pyride | 2,3-pyride | 2,3-pyride | ethylene | phenyl | 4-sulfo anilino | 4-sulfo | 1 | 0 | 1 |

**Table 2**

| No. | A | B | C | D | E | F | X | R | a | b | c |
|---|---|---|---|---|---|---|---|---|---|---|---|
| 18 | benzo | 2,3-pyride | 2,3-pyride | benzo | ethylene | phenyl | 4-sulfo anilino | 4-sulfo | 1 | 1 | 1 |
| 19 | 2,3-pyride | benzo | benzo | benzo | ethylene | phenyl | 2,5-disulfo anilino | 4-sulfo | 1 | 1 | 2 |
| 20 | benzo | 2,3-pyride | 2,3-pyride | 2,3-pyride | ethylene | phenyl | 2,5-disulfo anilino | 4-sulfo | 1 | 0 | 1 |
| 21 | benzo | 2,3-pyride | 2,3-pyride | benzo | ethylene | phenyl | 2,5-disulfo anilino | 4-sulfo | 1 | 1 | 1 |
| 22 | 2,3-pyride | benzo | benzo | benzo | ethylene | phenyl | 2-sulfo anilino | 4-carboxy | 1 | 1 | 2 |
| 23 | 2,3-pyride | benzo | benzo | benzo | ethylene | phenyl | 3-sulfo anilino | 4-carboxy | 1 | 1 | 2 |
| 24 | 2,3-pyride | benzo | benzo | benzo | ethylene | phenyl | 4-sulfo anilino | 4-carboxy | 1 | 1 | 2 |
| 25 | 2,3-pyride | benzo | benzo | benzo | ethylene | phenyl | 2,5-disulfo anilino | 4-carboxy | 1 | 1 | 2 |
| 26 | benzo | 2,3-pyride | 2,3-pyride | 2,3-pyride | ethylene | phenyl | 2,5-disulfo anilino | 4-carboxy | 1 | 0 | 1 |
| 27 | benzo | 2,3-pyride | 2,3-pyride | benzo | ethylene | phenyl | 2,5-disulfo anilino | 4-carboxy | 1 | 1 | 1 |
| 28 | benzo | 2,3-pyride | 2,3-pyride | 2,3-pyride | ethylene | phenyl | 4-sulfo anilino | H | 1 | 0 | 1 |
| 29 | benzo | 2,3-pyride | 2,3-pyride | benzo | ethylene | phenyl | 4-sulfo anilino | H | 1 | 1 | 1 |
| 30 | 2,3-pyride | benzo | benzo | benzo | propylene | phenyl | 4-sulfo anilino | H | 1 | 2 | 1 |
| 31 | 2,3-pyride | benzo | 2,3-pyride | benzo | propylene | phenyl | 4-sulfo anilino | H | 1 | 1 | 1 |
| 32 | 2,3-pyride | benzo | 2,3-pyride | 2,3-pyride | propylene | phenyl | 4-sulfo anilino | H | 1 | 0 | 1 |
| 33 | 2,3-pyride | benzo | benzo | benzo | ethylene | phenyl | 2,5-disulfo anilino | 4-chloro | 1 | 1 | 2 |
| 34 | 2,3-pyride | benzo | benzo | benzo | ethylene | phenyl | 2,5-disulfo anilino | 4-methyl | 1 | 1 | 2 |

**Table 3**

| No. | A | B | C | D | E | F | X | R | a | b | c |
|---|---|---|---|---|---|---|---|---|---|---|---|
| 35 | 2,3-pyride | benzo | benzo | benzo | ethylene | phenyl | 2,5-disulfo anilino | 4-methoxy | 1 | 1 | 2 |
| 36 | 2,3-pyride | benzo | benzo | benzo | ethylene | phenyl | 2,5-disulfo anilino | 4-fluoro | 1 | 1 | 2 |
| 37 | 2,3-pyride | benzo | benzo | benzo | ethylene | phenyl | 2,5-disulfo anilino | 2-chloro | 1 | 1 | 2 |
| 38 | 2,3-pyride | benzo | benzo | benzo | ethylene | phenyl | 2,5-disulfo anilino | 2-methyl | 2 | 1 | 2 |
| 39 | 2,3-pyride | benzo | benzo | benzo | ethylene | phenyl | 2,5-disulfo anilino | 2-methoxy | 2 | 1 | 2 |
| 40 | 2,3-pyride | benzo | benzo | benzo | ethylene | phenyl | 2,5-disulfo anilino | 2-methoxy | 2 | 1 | 2 |
| 41 | 2,3-pyride | benzo | benzo | benzo | ethylene | 2-pyridyl | 2,5-disulfo anilino | H | 1 | 1 | 2 |
| 42 | benzo | 2,3-pyride | 2,3-pyride | 2,3-pyride | ethylene | 2-pyridyl | 2,5-disulfo anilino | H | 1 | 0 | 1 |
| 43 | benzo | 2,3-pyride | 2,3-pyride | benzo | ethylene | 2-pyridyl | 2,5-disulfo anilino | H | 1 | 1 | 1 |
| 44 | 2,3-pyride | benzo | benzo | benzo | ethylene | phenyl | 3,6,8-trisulfo-1-napthylamino | H | 1 | 1 | 2 |
| 45 | benzo | 2,3-pyride | 2,3-pyride | 2,3-pyride | ethylene | phenyl | 3,6,8-trisulfo-1-napthylamino | H | 1 | 0 | 1 |
| 46 | benzo | 2,3-pyride | 2,3-pyride | benzo | ethylene | phenyl | 3,6,8-trisulfo-1-napthylamino | H | 1 | 1 | 1 |
| 47 | 2,3-pyride | benzo | benzo | benzo | ethylene | phenyl | 4,8-disulfo-2-napthylamino | H | 1 | 1 | 2 |
| 48 | 2,3-pyride | benzo | benzo | benzo | ethylene | 2-pyridyl | 3,6-disulfo-1-napthylamino | 4-chloro | 1 | 1 | 2 |
| 49 | 2,3- pyride | benzo | benzo | benzo | ethylene | phenyl | 3,6-disulfo-8-hydroxy-1-napthylamino | H | 1 | 2 | 1 |
| 50 | 2,3- pyride | benzo | benzo | benzo | ethylene | phenyl | 4-methoxy-2-sulfo anilino | H | 1 | 2 | 1 |
| 51 | 2,3-pyride | benzo | benzo | benzo | ethylene | phenyl | 4-nitro-2-sulfo anilino | H | 1 | 2 | 1 |

**Table 4**

| No. | A | B | C | D | E | F | X | R | a | b | c |
|---|---|---|---|---|---|---|---|---|---|---|---|
| 52 | 2,3-pyride | benzo | benzo | benzo | ethylene | phenyl | 2-chloro-5-sulfo anilino | H | 1 | 2 | 1 |
| 53 | 2,3-pyride | benzo | benzo | benzo | ethylene | phenyl | 3-methyl-6-sulfo anilino | H | 1 | 2 | 1 |
| 54 | 2,3-pyride | benzo | benzo | benzo | ethylene | phenyl | 2-carboxy-5-sulfo anilino | H | 1 | 2 | 1 |
| 55 | 2,3-pyride | benzo | benzo | benzo | ethylene | phenyl | 2,5-dicarboxyanilino | H | 1 | 2 | 1 |
| 56 | 2,3-pyride | benzo | benzo | benzo | ethylene | phenyl | 3-phosphoanilino | H | 1 | 2 | 1 |
| 57 | 2,3-pyride | benzo | benzo | benzo | ethylene | phenyl | 2-hydroxy-3-acetlyamino-5-sulfo anilino | H | 1 | 2 | 1 |
| 58 | 2,3-pyride | benzo | benzo | benzo | ethylene | 2-pyridyl | 5,7-disulfo-2-napthylamino | H | 1 | 2 | 1 |
| 59 | 2,3-pyride | benzo | benzo | benzo | ethylene | phenyl | 68-disulfo-2-napthylamino | H | 1 | 2 | 1 |
| 60 | 2,3-pyride | benzo | benzo | benzo | ethylene | phenyl | 3-carboxy-4-hydroxy-5-sulfo anilino | 4-methoxy | 1 | 2 | 1 |
| 61 | 2,3-pyride | benzo | benzo | benzo | ethylene | 2-pyridyl | 3-methyl-6-methoxy-4-sulfo anilino | 4-sulfo | 1 | 2 | 1 |
| 62 | 2,3-pyride | benzo | benzo | benzo | ethylene | phenyl | 4-methyl sulfonyl-2-sulfo anilino | H | 1 | 2 | 1 |
| 63 | 2,3-pyride | benzo | benzo | benzo | ethylene | phenyl | 4-methylthio-2-sulfo anilino | 2-methoxy | 1 | 2 | 1 |
| 64 | 2,3-pyride | benzo | benzo | benzo | ethylene | phenyl | 3-amino-4-sulfo anilino | 2-chloro | 1 | 2 | 1 |
| 65 | 2,3-pyride | benzo | benzo | benzo | ethylene | 2-pyridyl | 4-methylamino-5-sulfo anilino | H | 1 | 2 | 1 |
| 66 | 2,3-pyride | benzo | benzo | benzo | ethylene | phenyl | 4-dimethylamino-5-sulfo anilino | H | 1 | 2 | 1 |
| 67 | 2,3-pyride | benzo | benzo | benzo | ethylene | phenyl | 4-sulfamoyl-2-carboxy anilino | H | 1 | 2 | 1 |

It is generally possible to use the porphyrazine-based compound which is used in the invention without blending other coloring material and it is possible to use a second dye which is represented by Formula (2) described above or, in addition to this, coloring material which is able to be washed away in a cleaning step which will be described below.

Next, description will be given of a method for manufacturing a porphyrazine-based compound which is represented by Formula (1) and which is used in the invention.

It is possible to obtain the porphyrazine-based compound which is represented by Formula (1) by reacting a porphyrazine-compound which is represented by Formula (3) described below and organic amine which is represented by Formula (4) described below in the presence of ammonia.

It is possible to obtain each of the porphyrazine compounds which are represented by Formula (3) described below by synthesizing a compound which is represented by Formula (5) described below by a method known in the art or based thereon, and then chlorosulfonylating the resultant.

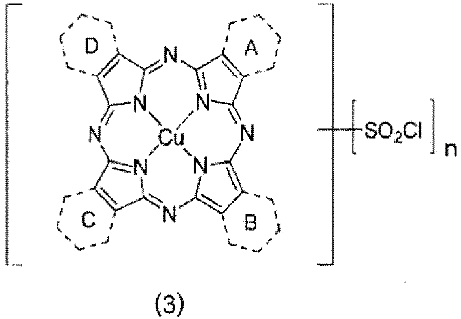

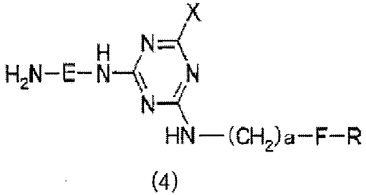

In other words, it is possible to synthesize the compound which is represented by Formula (5) described below, for example, based on a method known in the art which is disclosed in International Publication No. WO2007/091631 and International Publication No. WO2007/116933. These publications do not disclose a manufacturing method relating to a compound in which the number of nitrogen-containing hetero aromatic rings in the rings A to D is less than 1. However, it is also possible to synthesize a compound which is represented by Formula (5) in which the number of nitrogen-containing hetero aromatic rings in the rings A to D is less than 1 by changing the blending ratio of a nitrogen-containing hetero aromatic ring dicarboxylic acid derivative which is used as reaction raw material and a phthalic acid derivative when performing synthesis in a nitrile method or the Wyler method known in the art.

Here, that the obtained compound which is represented by Formula (5) is a mixture of an isomer relating to a substituted position of a nitrogen-containing hetero aromatic ring in the rings A to D and a substituted position of a nitrogen atom in a nitrogen-containing hetero aromatic ring is also as described in prior art literature.

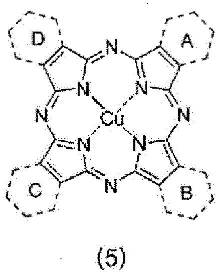

In Formula (5), the rings A to D represent the same meaning as the ones in Formula (1).

It is possible to obtain the porphyrazine compound which is represented by Formula (3) by chlorosulfonylating the compound which is represented by Formula (5) according to the method known in the art which is disclosed in the same international publications as in the synthesis of the compound which is represented by Formula (5). A chlorosulfonyl group in Formula (3) is not introduced in a case where the rings A to D which are introduced onto a benzene ring in the rings A to D are equivalent to a nitrogen-containing hetero aromatic ring group. Since one chlorosulfonyl group is generally introduced onto a benzene ring, the number "n" in Formula (3) is the number of the benzene rings in the rings A to D. Accordingly, the number "n" of the chlorosulfonyl groups in Formula (3) is 1.00 or more and less than 4.00 in correspondence to the number of the benzene rings of the porphyrazine compound which is represented by Formula (3).

Examples of another synthesis method of the porphyrazine compound which is represented by Formula (3) include a method of synthesizing a porphyrazine compound which has a sulfo group by condensing and ring-closing a sulfophthalic acid which has a sulfo group and a nitrogen-containing hetero aromatic ring dicarboxylic acid derivative such as quinolinic acid in advance and, after that, converting the sulfo group to a chlorosulfonyl group using an appropriate chlorinating agent such as thionyl chloride. In this case, by selecting a compound where the substituted position of a sulfo group of sulfophthalic acid which is a synthesis raw material is the third position and the fourth position, it is possible to control the substituted position of the sulfo group which is introduced into the porphyrazine compound which is represented by Formula (3). In other words, it is possible to selectively introduce each sulfo group at an "α" position in Formula (4) described below when using 3-sulfophthalic acid and at a "β" position when using 4-sulfophthalic acid in the same manner. Here, unless otherwise stated in the present specification, the technical terms of an "α position of a porphyrazine ring" or a "β position of a porphyrazine ring" has the meaning of the position which is equivalent in Formula (6).

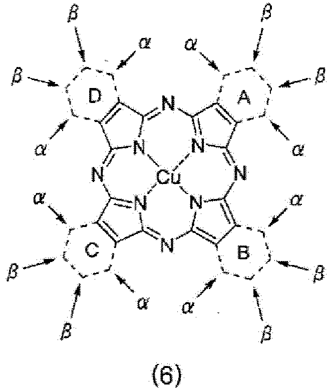

On the other hand, it is also possible to manufacture organic amine which is represented by Formula (4) by the method known in the art.

For example, a first condensate is obtained by adjusting the reactive liquid of 0.9 mol to 1.2 mol of substituted aniline which corresponds to X or substituted naphthyl amines and 1 mol of 2,4,6-trichloro-S-triazine (cyanur chloride) to approximately pH 1 to 5 using a hydroxide of alkali metal such as sodium hydroxide and carrying out a reaction under the conditions of 0°C to 40°C for 2 to 12 hours. Subsequently, a second condensate is obtained by adding 0.9 mol to 1.5 mol of amine which is "H₂N-(CH₂)a-F-R", adjusting the reaction liquid to approximately pH 5 to 10 using a hydroxide of alkali metal such as sodium hydroxide, and carrying out a reaction at 5°C to 80°C for 0.5 to 12 hours. The organic amine which is represented by Formula (4) is obtained by reacting 1 mol of the second condensate and 1 mol to 50 mol of alkylene diamines (amine which is "H₂N-E-NH₂") corresponding to E at pH 9 to 12 at 5°C to 90°C for 0.5 to 8 hours. Hydroxides of alkali metal such as sodium hydroxide or potassium hydroxide, and carbonates of alkali metal such as sodium carbonate or potassium carbonate are generally used for the pH adjustment of each of the condensing reactions. Here, the order of the condensation is preferably appropriately determined according to the reactivity of various types of compounds which are condensed with cyanur chloride and is not limited to the order described above.

The reaction of the porphyrazine compound which is represented by Formula (3) and the organic amine which is represented by Formula (4) is carried out by reaction in the presence of ammonia in an aqueous solvent at approximately pH 8 to 10, at 5°C to 70°C for 1 to 20 hours and a target porphyrazine-based compound which is represented by Formula (1) and which is used in the invention is obtained. The "ammonia" which is used for the reaction generally has the meaning of ammonia water. However, it is possible to use a chemical substance which generates ammonia by neutralization or decomposition. Examples of the chemical substance which generates ammonia include a substance which generates ammonia by neutralization such as ammonium salt such as ammonium chloride and ammonium sulfate, a substance which generates ammonia by heat decomposition such as urea or the like, ammonia gas, and the like; however, the invention is not limited thereto. The "ammonia" is preferably ammonia water and it is sufficient if commercially available concentrated ammonia water (generally commercially available as approximately 28% ammonia water) is used or if used by diluting with water as necessary.

The usage amount of the organic amine which is represented by Formula (4) is generally 1 mol or more of a theoretical value [the calculated molar number of the organic amine which is represented by Formula (4), which is necessary for obtaining a value of c in the target porphyrazine-based compound which is represented by Formula (1)] with respect to 1 mol of the porphyrazine compound which is represented by Formula (3), but varies according to the reactivity or the reaction conditions of the used organic amine and is not limited thereto. The usage amount is generally 1 mol to 3 mol of the theoretical value and preferably approximately 1 mol to 2 mol.

In addition, the porphyrazine-based compound which is represented by Formula (1) and which is used in the invention is synthesized from compounds which are represented by Formula (3) and Formula (4) under reaction conditions which do not particularly need to include an anhydrous condition. For this reason, it is theoretically considered that a part of the chlorosulfonyl group in Formula (3) is hydrolyzed by water which is mixed in the reaction system and a compound which is converted into sulfonic acid is a byproduct and, as the result, the byproduct is mixed in the target porphyrazine-based compound which is represented by Formula (1). However, it is difficult to distinguish an unsubstituted sulfamoyl group and a sulfo group in mass analysis and the chlorosulfonyl group in Formula (3) other than the groups which are reacted with organic amine which is represented by Formula (4) are described as groups which are entirely converted into unsubstituted sulfamoyl groups in the invention.

Furthermore, for the porphyrazine-based compound which is represented by Formula (1), in a part thereof, there are also cases where impurities which form copper porphyrazine ring (Pz), a dimer (for example, Pz-L-Pz), or a trimer via a divalent linking group (L) are a byproduct and are mixed in the reaction product. The divalent linking group which is represented by the L is -SO₂-, -SO₂-NH-SO₂-, or the like and there is also a case where a byproduct in which these two Ls are combined is formed in a case of a trimer.

It is possible to separate the porphyrazine-based compound which is obtained as described above and which is used in the invention as solid matter from the reaction liquid in the final step in the synthesis reaction thereof by filtering and separating (or the like) solid matter which is precipitated by acidizing or salting out, or the like. Salting out is preferably performed, for example, in the range of acidic to alkaline, preferably pH 1 to 11. The temperature during salting out is not particularly limited; however, the salting out is preferably carried out by adding sodium chloride or the like after heating to normally 40°C to 80°C, preferably 50°C to 70°C.

The porphyrazine-based compound which is synthesized by the method and which is used in the invention is obtained as a free acid or a salt thereof. Examples of the method of separating the porphyrazine-based compound as free acid include acidizing. In addition, examples of the method of separating as salt include salting out, or when it is not possible to obtain the desired salt by salting out, for example, a method of producing salt by adding a desired organic or inorganic salt group after converting the obtained salt to a free acid, salt exchanging methods known in the art, or the like.

In the invention, the content of the porphyrazine-based compound may be determined according to the type of the compound which is represented by Formula (1) or the type of a solvent component, but is preferably in the range of 0.05 mass% to 10 mass% with respect to the total weight of the penetrant and more preferably 0.5 mass% to 5 mass%. It is possible to secure the color development property on the recording medium by setting the content to be 0.05 mass% or more and viscosity adjustment of the penetrant is facilitated by setting the content to be 10 mass% or less and it is possible to easily secure the characteristics such as discharging reliability or clogging suppression.

### 1.2. Second Dye represented by Formula (2)

The ink jet printing penetrant according to the present embodiment is able to include the second dye which is represented by Formula (2) described below as a dye. The second dye which is represented by Formula (2) described above may be a salt and a detailed description will be given below of the second dye which is represented by Formula (2), that is, a phthalocyanine-based compound or the salt thereof. Here, in the present specification, simplified description will be given below referring to a "phthalocyanine-based compound" including both a "phthalocyanine-based compound or the salt thereof" for convenience, and the second dye which is represented by Formula (2) may be used with the first dye which is represented by Formula (1). 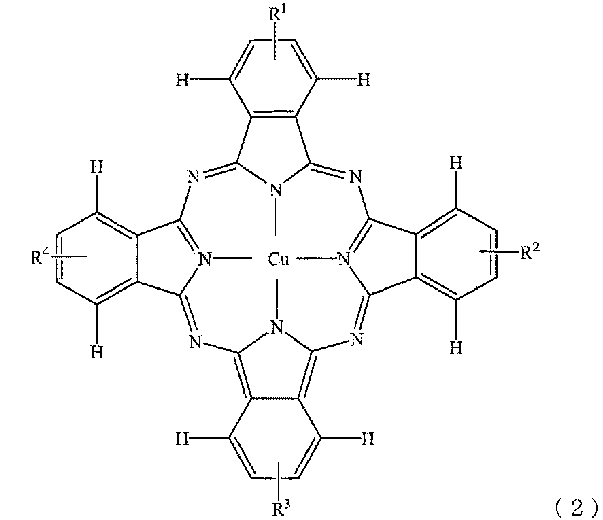 (In Formula (2), R¹ to R⁴ each independently represent SO₂Z. Z each independently represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group.)

The substituted or unsubstituted alkyl group which is represented by Z is preferably an alkyl group with 1 to 30 carbon atoms. Examples of the substituent include a halogen atom (for example, a chlorine atom and a bromine atom); a straight-chain or branched-chain alkyl group with 1 to 12 carbon atoms, an aralkyl group with 7 to 18 carbon atoms, an alkenyl group with 2 to 12 carbon atoms, a straight-chain or branched-chain alkynyl group with 2 to 12 carbon atoms, a cycloalkyl group with 3 to 12 carbon atoms which may have a side chain, a cycloalkenyl group with 3 to 12 carbon atoms which may have a side chain (specific examples of the group described above include methyl, ethyl, propyl, isopropyl, t-butyl, 2-methyl sulfonyl ethyl, 3-phenoxy propyl, trifluoro methyl, and cyclopentyl); an aryl group (for example, phenyl, 4-t-butyl phenyl, 2,4-di-t-amyl phenyl); a heterocyclic group (for example, imidazolyl, pyrazolyl, triazolyl, 2-furyl, 2-thienyl, 2-pyrimidinyl, and 2-benzothiazolyl); an alkoxy group (for example, methoxy, ethoxy, 2-methoxy ethoxy, and 2-methyl sulfonyl ethoxy); an aryloxy group (for example, phenoxy, 2-methyl phenoxy, 4-t-butyl phenoxy, 3-nitro phenoxy, 3-t-butyloxy carbonyl phenoxy, and 3-methoxy carbonyl phenoxy); an acyl amino group (for example, acetamide, benzamide, and 4-(3-t-butyl-4-hydroxy phenoxy) butanamide); an alkyl amino group (for example, methyl amino, butyl amino, diethyl amino, and methyl butyl amino); an anilino group (for example, phenyl amino and 2-chloroanilino); an ureido group (for example, phenyl ureide, methyl ureide, and N,N-dibutyl ureide); a sulfamoyl amino group (for example, N,N-dipropyl sulfamoyl amino); an alkyl thio group (for example, methyl thio, octyl thio, and 2-phenoxy ethyl thio); an aryl thio group (for example, phenyl thio, 2-butoxy-5-t-octyl phenyl thio, and 2-carboxy phenyl thio); an alkyloxy carbonyl amino group (for example, methoxy carbonyl amino); a sulfonamide group (for example, methane sulfonamide, benzene sulfonamide, and p-toluene sulfonamide); a carbamoyl group (for example, N-ethyl carbamoyl and N,N-dibutyl carbamoyl); a sulfamoyl group (for example, N-ethyl sulfamoyl, N,N-dipropyl sulfamoyl, and N,N-diethyl sulfamoyl); a sulfonyl group (for example, methyl sulfonyl, octyl sulfonyl, phenyl sulfonyl, and 4-methyl phenyl sulfonyl); an alkyloxy carbonyl group (for example, methoxy carbonyl and butyloxy carbonyl); a hetero ring oxy group (for example, 1-phenyl tetrazole-5-oxy and 2-tetrahydro pyranyloxy); an azo group (for example, phenyl azo, 4-methoxy phenyl azo, 4-pivaloyl amino phenyl azo and 2-hydroxy-4-propanoyl phenyl azo); an acyloxy group (for example, acetoxy); a carbamoyloxy group (for example, N-methyl carbamoyloxy and N-phenyl carbamoyloxy); a silyloxy group (for example, trimethyl silyloxy and dibutyl methyl silyloxy); an aryloxy carbonyl amino group (for example, phenoxy carbonyl amino); an imide group (for example, N-succinimide and N-phthalimide); a hetero ring thio group (for example, 2-benzo thiazolyl thio, 2,4-di-phenoxy-1,3,5-triazole-6-thio, and 2-pyridylthio); a sulfinyl group (for example, 3-phenoxy propyl sulfinyl); a phosphonyl group (for example, phenoxy phosphonyl, octyloxy phosphonyl, and phenyl phosphonyl); an aryloxy carbonyl group (for example, phenoxy carbonyl); an acyl group (for example, acetyl, 3-phenyl propanoyl, and benzoyl); an ionic hydrophilic group (for example, a carboxyl group, a sulfo group, a quaternary ammonium group, a sulfonyl sulfamoyl group, and an acyl sulfamoyl group); other cyano groups, a hydroxy group, a nitro group, and an amino group. Among these substituents, a hydroxy group, an alkoxy group, a sulfamoyl group, a sulfonamide group, an acyl amino group, a carbamoyl group, a cyano group, and an ionic hydrophilic group are preferable, and among these, a hydroxy group, a sulfamoyl group, and an ionic hydrophilic group are particularly preferable.

The substituted or unsubstituted cycloalkyl group which is represented by Z is preferably a cycloalkyl group with 5 to 30 carbon atoms. Examples of the substituent include the same substituents described above.

The substituted or unsubstituted alkenyl group which is represented by Z is preferably an alkenyl group with 2 to 30 carbon atoms. Examples of the substituent include the same substituents described above.

The substituted or unsubstituted aralkyl group which is represented by Z is preferably an aralkyl group with 7 to 30 carbon atoms. Examples of the substituent include the same substituents described above.

The substituted or unsubstituted aryl group which is represented by Z is preferably an aryl group with 6 to 30 carbon atoms. Examples of the substituent include the same substituents described above.

The heterocyclic group which is represented by Z is preferred to be a 5-membered or 6-membered ring, and these may be further condensed. In addition, the heterocyclic group may be an aromatic hetero ring or non-aromatic hetero ring. Examples of the heterocyclic group which is represented by Z will be given below in the form of a hetero ring omitting a substituted position; however, the substituted position is not limited and for example, for pyridine, it is possible to carry out substitution at a second position, a third position, and a fourth position. Examples thereof include pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isooxazole, benzisooxazole, pyrrolidine, piperidine, piperazine, imidazolidine, and thiazoline. Among these, an aromatic heterocyclic group is preferable, and preferable examples thereof include pyridine, pyrazine, pyrimidine, pyridazine, triazine, pyrazole, imidazole, benzimidazole, triazole, thiazole, benzothiazole, isothiazole, benzisothiazole, and thiadiazole in the same manner as above. The above may have a substituent and examples of the substituents include the same substituents described above.

In addition, regarding a phthalocyanine-based compound which is represented by Formula (2), Pc (a phthalocyanine ring) may form a dimer (for example, Pc-M-L-M-Pc) or a trimer via L (a divalent linking group), and a plurality of M which are present at this time may be the same or may be different from each other.

Here, Cu which is in the center of the phthalocyanine-based compound which is represented by Formula (2) may be a hydrogen atom, other metal elements, metal oxide, metal hydroxide, or metal halogenide. Examples of metal elements include Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pd, Sb, and Bi. Examples of oxides include VO and GeO. In addition, examples of hydroxides include Si(OH)₂, Cr(OH)₂, and Sn(OH)₂. Furthermore, examples of halogenides include AlCl, SiCl₂, VCl, VCl₂, VOCL, FeCl, GaCl, and ZrCl. Among these, Ni, Zn, Al, and the like are preferable in a case of use in other than Cu.

The divalent linking group which is represented by L is preferably an oxy group -O-, a thio group -S-, a carbonyl group -CO-, a sulfonyl group -SO₂-, an imino group -NH-, a methylene group -CH₂-, and a group which is formed of a combination of these.

In Formula (2) described above, the molecular weight of the phthalocyanine-based compound is preferably in the range of 750 to 3000, a molecular weight in the range of 995 to 2500 is more preferable, within which a molecular weight of 995 to 2000 is preferable, and a molecular weight in the range of 995 to 1800 in particular is most preferable.

Regarding the phthalocyanine-based compound which is represented by Formula (2), in a case where Pc (a phthalocyanine ring) forms a dimer (for example, Pc-M-L-M-Pc) or a trimer via L (a divalent linking group), a preferable molecular weight, for example, a particularly preferable molecular weight is twice (in a case of a dimer) or three times (in a case of a trimer) the particularly preferable molecular weight (the range of 995 to 1800) described above. Here, the preferable molecular weight of the dimer or the trimer is a value which includes a linking group L.

Regarding the phthalocyanine-based compound which is represented by Formula (2), at least one of Z is an ionic hydrophilic group or a group which has an ionic hydrophilic group as a substituent and may be in a salt state and examples of counter ions which form salt include alkali metal ions (for example, sodium ions, potassium ions, and lithium ions), ammonium ions, organic cations (for example, tetramethyl guanidinium ions), and organic and/or inorganic anions (for example, halogen ions, methanesulfonic acid ions, and benzenesulfonic acid ions).

Regarding the phthalocyanine-based compound which is represented by Formula (2), since at least one group of an ionic hydrophilic group or a group which has an ionic hydrophilic group as a substituent in one molecule is present, the solubility or the dispersibility with respect to an aqueous medium is favorable. From this point of view, the phthalocyanine-based compound which is represented by Formula (2) is preferably a compound which has at least two ionic hydrophilic groups in one molecule, preferably a compound where at least one of a plurality of ionic hydrophilic groups is a sulfo group, and among these, most preferably a compound which has at least two sulfo groups in one molecule.

The phthalocyanine compound which is able to be used in the invention and which is represented by Formula (2) described above is synthesized by reacting, for example, a phthalonitrile compound which is represented by Formula (7) described below and/or a diiminoisoindoline derivative which is represented by Formula (8) described below and a metal derivative which is shown by M-(Y)d. Specific examples of the metal derivative include copper chloride, copper bromide, copper iodide, nickel chloride, nickel bromide, nickel acetate, cobalt chloride, cobalt bromide, cobalt acetate, iron chloride, zinc chloride, zinc bromide, zinc iodide, zinc acetate, vanadium chloride, vanadium trichloride oxide, palladium chloride, palladium acetate, aluminum chloride, manganese chloride, manganese acetate, manganese acetylacetonate, lead chloride, lead acetate, indium chloride, titanium chloride, and stannous chloride.

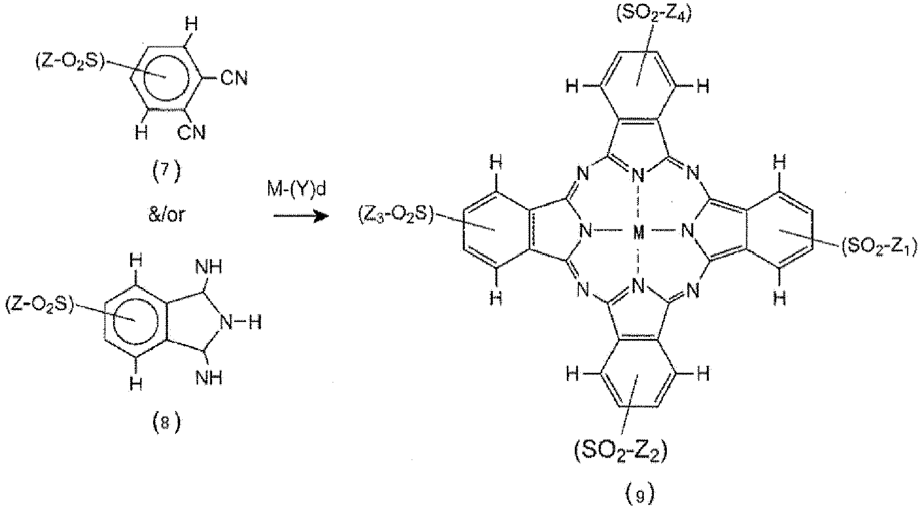

The compound which is obtained in this manner and which is represented by Formula (2) described above is generally a mixture of compounds which are represented by Formulas (2-1) to (2-4) described below which are isomers where the introduction positions of R¹(SO₂-Z₁), R²(SO₂-Z₂) R³(SO₂-Z₃), and R⁴(SO₂-Z₄) are different.

Furthermore, in a case of preparing a penetrant using two or more types of Formula (7) and/or Formula (8) in which a substituent is different, the compound which is represented by Formula (2) described above is a mixture in which the type and position of the substituent are different.

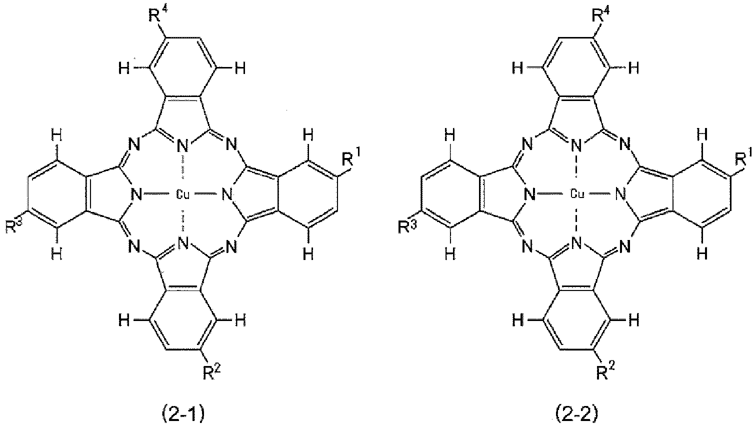

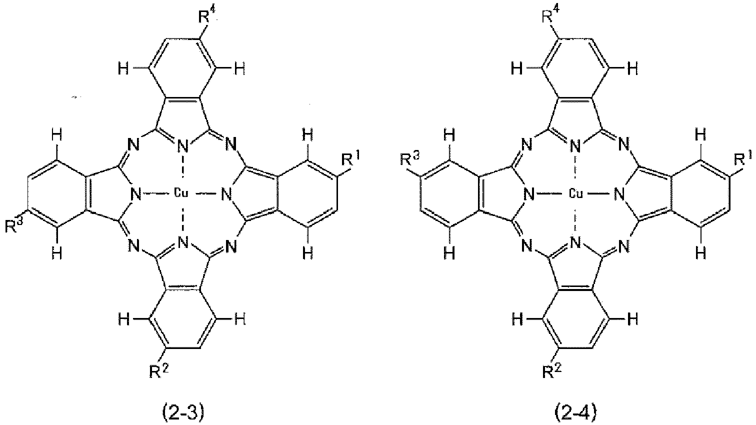

Examples of the phthalocyanine-based compound which is used in the invention include compounds with a structure which corresponds to the description in JP-A-2003-13792 other than JP-A-2002-249677, JP-A-2003-213167, and JP-A-2003-213168; however, particularly preferable examples are given in the tables below. It is possible to synthesize the compounds described in Table 5 and Table 6 by the methods described in the publications or specifications described above. Naturally, the starting compound, the pigment intermediate, and the synthesis method are not limited thereto.

**Table 5**

| In General Formula (9) | | | | | |
|---|---|---|---|---|---|
| | M | Z₁ | Z₂ | Z₃ | Z₄ |
| Compound A | Cu | -(CH₂)₃SO₃Na | -(CH₂)₃SO₃Na | -(CH₂)₃SO₃Na | -(CH₂)₃SO₃Na |
| Compound B | Cu | -(CH₂)₃SO₃Li | -(CH₂)₃SO₃Li | -(CH₂)₃SO₃Li | -(CH₂)₃SO₃Li |
| Compound C | Cu | -(CH₂)₃CO₂K | -(CH₂)₃CO₂K | -(CH₂)₃CO₂K | -(CH₂)₃CO₂K |
| Compound D | Cu | -CH₂CH(OH)CH₂SO₃Li | -CH₂CH(OH)CH₂SO₃Li | -CH₂CH(OH)CH₂SO₃Li | -CH₂CH(OH)CH₂SO₃Li |
| Compound E | Cu | -(CH₂)₂CH(CH₃)SO₃Li | -(CH₂)₂CH(CH₃)SO₃Li | -(CH₂)₂CH(CH₃)SO₃Li | -(CH₂)₂CH(CH₃)SO₃Li |

**Table 6**

| | | | | | |
|---|---|---|---|---|---|
| In 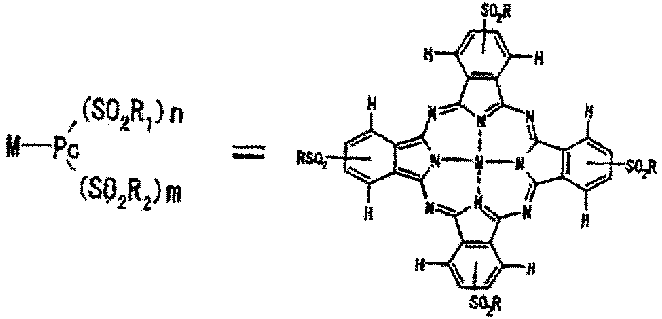 | | | | | |

| | M | R₁ | n | R₂ | m |
|---|---|---|---|---|---|
| Compound F | Cu | -(CH₂)₃SO₃Li | 3 | -(CH₂)₃SO₂NHCH₂CH(OH)CH₃ | 1 |
| Compound G | Cu | -(CH₂)₃SO₃Li | 2 | -(CH₂)₃SO₂NHCH₂CH(OH)CH₃ | 2 |
| Compound H | Cu | -(CH₂)₃SO₃Li | 3 | -(CH₂)₃SO₂NHCH(CH₃)CH₂OH | 1 |
| Compound I | Cu | -(CH₂)₃SO₃Li | 2 | -(CH₂)₃SO₂NHCH(CH₃)CH₂OH | 2 |
| Compound J | Cu | -(CH₂)₃SO₃Li | 3 | -(CH₂)₃SO₂N(C₂H₄OH)₂ | 1 |
| Compound K | Cu | -(CH₂)₃SO₃Li | 3 | -(CH₂)₅CO₂Li | 1 |

| | | | | | |
|---|---|---|---|---|---|
| In the Table, the introduction position order of each substituent of (SO₂R₁), (SO₂R₂) does not matter. (The above represent isomers represented by (2-1) to (2-4) described above) The values of m and n are the molar ratio of the introduction of the phthalonitrile derivative used during phthalocyanine derivative synthesis. | | | | | |

The content of the phthalocyanine-based compound which is used in the invention may be determined according to the type of the compound which is represented by Formula (2) or the type of a solvent component, but is preferably in a range of 0.05 mass% to 10 mass% with respect to the total weight of the penetrant, and more preferably 0.5 mass% to 5 mass%. It is possible to secure the color development property on the recording medium by setting the content to be 0.05 mass% or more and viscosity adjustment of the penetrant is facilitated by setting the content to be 10 mass% or less and it is possible to easily secure the characteristics such as discharging reliability or clogging suppression.

### 1.3. Other Components

Regarding the penetrant according to the present embodiment, it is also possible to appropriately add a solvent as a medium which dissolves the solutes described above or various types of additives in order to favorably maintain the storage stability thereof and the discharging stability from the head, to improve clogging, or to prevent deterioration of the penetrant.

### Solvent

The penetrant according to the present embodiment may further include a solvent. The solvent is not particularly limited; however, for example, it is possible to use an organic solvent or water.

Examples of the water include pure water such as ion-exchanged water, ultrafiltration water, reverse osmosis water, and distilled water and water such as ultra-pure water where ionic impurities are removed as much as possible. In addition, when using water which is sterilized by ultraviolet irradiation, the addition of hydrogen peroxide, and the like, it is possible to prevent the generation of molds or bacteria in a case of storing the penetrant for a long period. Due to this, there is a tendency for storage stability to be further improved.

Among organic solvents, a volatile water-soluble organic solvent is more preferable. The organic solvent is not particularly limited; however, specific examples thereof include alcohols or glycols such as glycerine, trimethyl glycine, ethylene glycol, diethylene glycol, triethylene glycol, propylene glycol, dipropylene glycol, 1,3-propanediol, 1,2-butanediol, 1,2-pentanediol, 1,2-hexanediol, 1,4-butanediol, 1,5-pentanediol, 1,6-hexanediol, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol monobutyl ether, diethylene glycol mono-t-butyl ether, propylene glycol monomethyl ether, propylene glycol monoethyl ether, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n-propyl ether, dipropylene glycol mono-iso-propyl ether, diethylene glycol dimethyl ether, diethylene glycol diethyl ether, diethylene glycol dibutyl ether, diethylene glycol ethyl methyl ether, diethylene glycol butyl methyl ether, triethylene glycol dimethyl ether, tetraethylene glycol dimethyl ether, dipropylene glycole dimethyl ether, dipropylene glycol diethyl ether, tripropylene glycol dimethyl ether, methanol, ethanol, n-propyl alcohol, iso-propyl alcohol, n-butanol, 2-butanol, tert-butanol, isobutanol, n-pentanol, 2-pentanol, 3-pentanol, and tert-pentanol, N,N-dimethyl formamide, N,N-dimethyl acetamide, 2-pyrrolidone, N-methyl 2-pyrrolidone, 2-oxazolidone, 1,3-dimethyl 2-imidazolidinone, dimethyl sulfoxide, sulfolane, and 1,1,3,3-tetramethyl urea.

Regarding the solvent, one type may be used individually or two or more types may be used in combination. The added amount of the organic solvent is not particularly limited and it is possible to appropriately determine the amount as necessary. For example, in a case of making the permeability of the penetrant to a recording medium or the moisture retaining property excellent, one type or more selected from the group formed of glycerine, trimethyl glycine, triethylene glycol monobutyl ether, and 2-pyrrolidone are preferably used.

The added amount of the organic solvent is preferably 5 mass% to 50 mass% with respect to the total amount of the penetrant, more preferably 10 mass% to 45 mass%, and even more preferably 20 mass% to 45 mass%.

Among the solvents described above, the solvent preferably includes triethylene glycol monobutyl ether and the added amount of triethylene glycol monobutyl ether is preferably twice or more the added amount of polyoxyalkylene alkyl ether. In addition, the added amount of triethylene glycol monobutyl ether is preferably 2.0 mass% to 15 mass%, more preferably 2.5 mass% to 12.5 mass%, and even more preferably 3.0 mass% to 10 mass%. The discharging stability is improved by the added amount of triethylene glycol monobutyl ether being within the ranges described above.

### Moisturizing Agent

The penetrant of the invention is able to include a moisturizing agent which is selected from sugars. Including a moisturizing agent makes it possible to moisturize the penetrant by suppressing evaporation of water in an ink jet recording method. The sugars are preferably maltitol, sorbitol, gluconolactone, or maltose. The moisturizing agent is preferably added in the range of 5 mass% to 50 mass% with respect to the total amount of the penetrant, more preferably 5 mass% to 30 mass%, even more preferably 5 mass% to 20 mass%. The moisture retaining property is obtained when the proportion of moisturizing agent is 5 mass% or more and it is easy to adjust the viscosity when it is 50 mass% or less.

### Non-ion-based Surfactant

In addition, a non-ion-based surfactant is preferably included in the penetrant of the invention as an additive which is effective for keeping the roundness of 1 dot at the same time as obtaining quick ink fixing (permeability).

Examples of the non-ion-based surfactant which is used in the invention include acetylene glycol-based surfactants. Specific examples of the acetylene glycol-based surfactant include 2,4,7,9-tetramethyl-5-decyne-4,7-diol, 3,6-dimethyl-4-octyne-3,6-diol, or 3,5-dimethyl-1-hexyne-3-ol, and 2,4-dimethyl-5-hexyne-3-ol. In addition, it is also possible to use commercially available acetylene glycol-based surfactants and examples thereof include Surfynol (registered trade mark) 465, Surfynol 104, and Olfin (registered trade mark) STG (the above are product names manufactured by Nissin Chemical Industry Co., Ltd.). The added amount thereof is 0.1 mass% to 5 mass% and preferably 0.5 mass% to 2 mass%. It is possible to obtain sufficient permeability by setting the added amount to be 0.1 mass% or more and also it is easy to prevent the generation of bleeding of an image by setting the amount to be 5 mass% or less.

### Permeation Promoter

Furthermore, in addition to the non-ion-based surfactant, glycol ethers may be added as a permeation promoter.

Examples of glycol ethers which are used in the invention include ethylene glycol monobutyl ether, diethylene glycol monobutyl ether, triethylene glycol monoethyl ether, propylene glycol monomethyl ether, dipropylene glycol monoethyl ether, propylene glycol monobutyl ether, dipropylene glycol monobutyl ether, and triethylene glycol monobutyl ether. The added amount is 3 mass% to 30 mass% and preferably 5 mass% to 15 mass%. When the added amount is less than 3 mass%, it is not possible to obtain a bleeding prevention effect. In addition, when exceeding 30 mass%, not only is bleeding generated in an image, since oily separation occurs, a dissolution aiding agent of these glycol ethers is necessary, due to which the viscosity of ink is increased and discharging is difficult in the ink jet head.

Furthermore, pH adjusting agents such as triethanol amine or alkali metallic hydroxide, hydrotropic agents such as urea and the derivatives thereof, water-soluble polymers such as sodium alginate, water-soluble resins, fluorine-based surfactants, antifungal agents, and/or rust preventive agents may be added in the penetrant of the invention as necessary.

### 1.4. Method for Preparing Penetrant

The penetrant according to the present embodiment is obtained by mixing the components described above in an arbitrary order and removing impurities by carrying out filtration as necessary. As a method for mixing each component, a method of adding material sequentially in a container which is provided with a stirring apparatus such as a mechanical stirrer and a magnetic stirrer and stirring and mixing is favorably used. As the filtration method, it is possible to perform centrifugal filtration or filter filtration as necessary and examples thereof include a method of preparing the penetrant by sufficiently mixing and dissolving each component and carrying out pressure filtration using a membrane filter, and then carrying out a degassing process using a vacuum pump and the like.

### 1.5. Physical Properties of Penetrant

Regarding the penetrant according to the present embodiment, from the point of view of improving the discharging property from nozzles in a case of using an ink jet printing method, the viscosity at 20°C is preferably 30 mPa·s or less, more preferably 25 mPa·s or less, even more preferably 20 mPa·s or less, particularly preferably 15 mPa·s or less, even more preferably 10 mPa·s or less, and even more preferably 5 mPa·s or less. The lower limit is not limited but is preferably 1 mPa·s or more. Here, regarding the measurement of the viscosity, for example, it is possible to measure the viscosity in an environment of 20°C using viscoelastic testing machine MCR-300 (product name, manufactured by Physica Inc.).

### 1.6. Usage

Since the penetrant which is used in the present embodiment contains the first dye which is represented by Formula (1) described above and the second dye which is represented by Formula (2) described above as a dye, it is possible to carry out a discharging check by discharging the penetrant onto a recording medium such as paper or a cloth before recording in the ink jet printing apparatus known in the art which will be described below. In addition, since it is possible to easily wash off the first dye which is represented by Formula (1) described above and the second dye which is represented by Formula (2) described above in the cleaning step which will be described below even when dyeing is performed with respect to cloths of various types of fiber types, the permeability of the ink which includes a coloring material to cloths is promoted and the color balance of the dyeing is not lost in the subsequent recording steps.

### 2. Ink Jet Printing Method

Next, description will be given of the ink jet printing method according to the present embodiment. The ink jet printing method according to the present embodiment forms an image on a cloth by ink jet printing which uses the ink jet printing penetrant described above and the ink composition known in the art. For example, the ink jet printing method described above has a recording step of attaching an ink composition which includes a dye on the surface of a cloth by an ink jet method and a penetrant attaching step of attaching the penetrant of the present embodiment on the front surface or the rear surface of the cloth described above before, after, or at the same time as the recording step.

### 2.1. Ink Jet Printing Apparatus

Firstly, description will be given of an example of the ink jet printing apparatus which carries out the ink jet printing method according to the present embodiment with reference to the diagrams. Here, the ink jet printing apparatus which is able to be used in the ink jet printing method according to the present embodiment is not limited to the aspect below.

Description will be given below of the ink jet printing apparatus according to the present embodiment with an example of an on-carriage type printer in which ink cartridge is mounted on a carriage; however, the ink jet printing apparatus according to the invention is not limited to an on-carriage type printer and may be an off-carriage type printer in which ink cartridge is not mounted on a carriage and is fixed in an external portion.

In addition, the printer which is used for the description below is a serial printer in which a print head is mounted on a carriage which moves in a predetermined direction and liquid droplets are discharged onto a recording medium by the head moving along with the movement of the carriage; however, the ink jet printing apparatus according to the invention is not limited to a serial printer and may be a line printer of which a head is formed to be wider than the width of the recording medium and which discharges liquid droplets onto the recording medium without the print head moving.

The scale of each member is appropriately changed such that each member is a recognizable size in each diagram which is used for the description below.

Examples of the ink jet printing apparatus include an ink jet printer (below, a printer) on which the ink jet head shown in the figure is mounted. As shown in the figure, a printer 1 is an apparatus for recording an image or the like by ejecting ink in liquid form with respect to the surface of a cloth as a recording medium 2. The printer 1 is provided with an ink jet head 3, a carriage 4 to which the ink jet head 3 is attached, a carriage moving mechanism 5 which moves the carriage 4 in a main scanning direction (the longitude direction of the printer 1, that is, the width direction of the recording medium 2), a transport mechanism 6 which transports the recording medium 2 in a sub scanning direction (the direction which is orthogonal to the main scanning direction), and the like.

Here, a penetrant and ink which are used in the ink jet printing apparatus is stored in an ink cartridge 7. The ink cartridge 7 is mounted to be able to be attached and detached with respect to the ink jet head 3. Here, it is also possible to adopt a configuration in which the ink cartridge 7 is arranged on a main body side of the printer 1 and ink is supplied from the ink cartridge 7 to the ink jet head 3 through an ink supplying tube.

The carriage moving mechanism 5 described above is provided with a timing belt 8. Then, the timing belt 8 is driven by a pulse motor 9 such as a DC motor. Therefore, when the pulse motor 9 is operated, the carriage 4 is guided to a guide rod 10 which is constructed in the printer 1 and moves forward and backward in a main scanning direction.

A platen 11 is arranged below the ink jet head 3 at the time of recording operation. The platen 11 is arranged opposed to and leaving an interval with a nozzle forming surface (a nozzle plate; which is not shown in the diagram) of the ink jet head 3 when performing the recording operation and supports the recording medium 2. In addition, a flushing box 12 is provided in an end portion of a main scanning direction of the platen 11, specifically, in a region which is separated from a region (a recording region) to which ink is ejected with respect to the recording medium 2 which is arranged in the platen 11. The flushing box 12 is, for example, a member which catches a penetrant or ink which is ejected from the ink jet head 3 in preliminary discharge of the penetrant or the ink. In the present embodiment, the flushing box 12 is formed in the form of a box which opens upward (on the ink jet head 3 side). Then, an absorber (which is not shown in the diagram) which is produced by, for example, a urethane sponge or the like is arranged on the bottom surface of the inside of the flushing box 12. Here, the flushing box 12 is desirably provided on both sides of the platen 11 in the main scanning direction; however, it is sufficient if the flushing box 12 is provided at least on one side.

The ink jet head 3 is a means of attaching the penetrant or ink on the recording medium 2 and is provided with nozzles (which are not shown in the diagram) which discharge the penetrant or ink. Examples of the method of discharging the penetrant or ink from nozzles include a method (an electrostatic suction method) of applying a strong electric field between nozzles and acceleration electrodes which are arranged in front of the nozzles, continuously discharging the penetrant or ink in a liquid droplet form from the nozzles, and carrying out the discharging in correspondence with a recording information signal while the liquid droplets of the reactive liquid are flying between deflecting electrodes; a method of forcefully discharging liquid droplets of the penetrant or oil-based ink by applying pressure to a reactive liquid using a small pump and mechanically vibrating nozzles using a crystal vibrator or the like; a method (a piezo method) of adding pressure and to the penetrant or ink with a piezoelectric element at the same time as a recording information signal and discharging and recording the liquid droplets of the penetrant or ink; a method (a thermal jet method) of heating and foaming a penetrant or ink using a minute electrode according to a recording information signal and discharging and recording the liquid droplets of the penetrant or ink, and the like.

It is possible to use either of a line type ink jet head or a serial type ink jet head as the ink jet head 3; however, a serial type ink jet head is used in the present embodiment.

Here, the ink jet printing apparatus which is provided with a serial type ink jet head performs recording by performing scanning (passes) which discharges ink while relatively moving the recording head with respect to a recording medium a plurality of times. Specific examples of the serial type recording head include a serial type recording head in which a recording head is mounted on a carriage which moves in the width direction of a recording medium (the direction which intersects with the transport direction of a recording medium) and from which liquid droplets are discharged onto the recording medium as the recording head moves along with the movement of the carriage.

On the other hand, an ink jet printing apparatus which is provided with a line type ink jet head performs recording by performing scanning (passes) which discharges ink while moving the recording head relatively to the recording medium once. Specific examples of the line type recording head include a line type recording head in which the recording head is formed to be wider than the width of the recording medium and the recording head discharges liquid droplets onto the recording medium without moving.

Here, although not shown in the diagram, a drying means may be provided in the ink jet printing apparatus. Providing the drying means makes it possible to quickly form a recorded image or the like by quickly evaporating and dispersing a medium in a liquid form from a penetrant or ink which is attached on the recording medium. The drying means which is able to be adopted as the drying means is not particularly limited as long as the drying means is provided with a configuration which promotes evaporation and dispersion of a medium in a liquid form which is included in the penetrant or ink. Examples thereof include a means of adding heat to a recording medium, a means of blowing wind to a penetrant or ink, moreover, a means with a combination thereof, and the like. In detail, forced air heating, radiational heating, electrical conduction heating, high frequency drying, microwave drying, and the like are preferably used.

In addition, the drying of the drying means is preferably drying which is accompanied by heating and the ink jet printing apparatus preferably performs recording by discharging onto a heated recording medium. The heating method is not particularly limited; however, examples thereof include a heat press method, a normal pressure steam method, a high-pressure steam method, and a thermofix method and examples of the heating means of the recording medium include infrared radiation (a lamp). In this case, the temperature of the heated recording medium is preferably 30°C to 50°C and more preferably 30°C to 40°C. In this case, it is possible to promote drying of ink in the recording step.

Here, the ink jet printing apparatus of the present embodiment performs an ink jet printing method using an ink composition which will be described below.

### 2.2. Ink Composition

Detailed description will be given below of components which are included in an ink composition (also simply referred to below as "ink") which is used in the ink jet printing method according to the present embodiment.

### 2.2.1. Dye

The ink which is used in the ink jet printing method according to the present embodiment includes a water-soluble dye. There is no particular limit as long as the dye is water-soluble; however, it is possible to use acidic dye, reactive dye, direct dye, and the like which are widely used in printing techniques.

Examples of the acidic dye include C.I. Acid Yellow 17, 19, 23, 34, 36, 42, 49, 79, 99, 110, 127, 137, 151, 166, 194, 199, 204, 220, 232, and 241, C.I. Acid Blue 1, 7, 9, 15, 25, 40, 62, 90, 104, 113, 114, 129, 140, 158, 193, and 284, C.I. Acid Red 1, 14, 18, 33, 52, 73, 88, 97, 106, 114, 119, 131, 138, 141, 151, 182, 183, 184, 186, 195, 198, 211, 249, 252, 263, 289, 315, 337, 357, 362, 407, 414, and 423, C.I. Acid Black 1, 2, 52, 52:1, 172, 194, 210, and 234, C.I. Acid Orange 7, 8, 10, 18, 33, 51, 56, 67, 74, 86, 94, 95, 142, and 154, C.I. Acid Brown 1, 14, 45, 75, 83, 98, 106, 161, 165, 214, 288, 298, 348, 349, 355, 365, 422, 425, and 434, C.I. Acid Green 9, 16, 20, 25, 28, 68, 73, 101, and 104, C.I. Acid Violet 17, 43, 48, 49, 54, 90, and 97, and the like.

Examples of the reactive dye include C.I. Reactive Yellow 2, 5, 18, 22, 42, 44, 57, 77, 81, 84, 86, 95, 105, 107, 135, 145, 160, and 186, C.I. Reactive Blue 13, 15, 15:1, 19, 21, 49, 50, 59, 72, 77, 176, and 220, C.I. Reactive Red 3, 3:1, 24, 24:1, 31, 35, 52, 76, 84, 111, 120, 141, 152, 180, 195, 198, 218, 226, and 245, C.I. Reactive Black 5, 8, 31, and 39, C.I. Reactive Orange 4, 7, 12, 13, 15, 16, 35, 62, 72, 78, 99, 122, and 181, C.I. Reactive Brown 11 and 18, C.I. Reactive Green 8, 12, and 15, C.I. Reactive Violet 1, 2, 5, 13, and 33, and the like.

Examples of the direct dye include C.I. Direct Yellow 44, 86, and 99, C.I. Direct Blue 71, 86, 87, and 199, C.I. Direct Red 16, 23, 72, 80, 81, 227, 239, and 254, C.I. Direct Black 19, 22, 80, 155, 168, and 170, C.I. Direct Orange 6, 26, 34, and 39, C.I. Direct Brown 44, 106, 115, 210, and 223, C.I. Direct Green 26, 59, and 85, C.I. Direct Violet 9, 35, 51, and 66, and the like.

Regarding the dyes described above, one type may be used individually or two or more types may be used together.

### 2.2.2. Other Components

Ink which is used in the present embodiment may contain water, an organic solvent, a surfactant, a pH adjusting agent, a preservative, an antifungal agent, and the like.

### Water

Water is a medium which is the main part of the ink and is a component which is evaporated and dispersed by drying. Examples of the water include pure water such as ion-exchanged water, ultrafiltration water, reverse osmosis water, and distilled water and water such as ultra-pure water where ionic impurities are removed as much as possible. In addition, when using water which is sterilized by ultraviolet irradiation, addition of hydrogen peroxide, and the like, it is possible to prevent the generation of molds or bacteria in a case of storing ink for a long period. The content of the water which is included in ink is not particularly limited; however, it is possible to be, for example, 50 mass% or more with respect to the total mass of the ink and moreover, to be 50 mass% to 95 mass%.

### Organic Solvent

Examples of the organic solvent include 1,2-alkanediols, multivalent alcohols, glycol ethers, and the like. These may be used as one type individually or two or more types may be used together. It is possible for the content of the organic solvent to be, for example, preferably 7 mass% to 27 mass%, more preferably 9 mass% to 25 mass%, even more preferably 10 mass% to 20 mass%, and most preferably 11 mass% to 15 mass%.

Examples of 1,2-alkanediols include 1,2-propanediol, 1,2-butanediol, 1,2-pentanediol, 1,2-hexanediol, 1,2-octanediol, and the like. Since 1,2-alkanediols are excellent in the effect of evenly wetting a recording medium such as a cloth by increasing the wettability of ink, it is possible to record an image with less bleeding. In a case of containing 1,2-alkanediols, it is possible for the content thereof to be 1 mass% to 20 mass% with respect to the total mass of ink.

Examples of multivalent alcohols include ethylene glycol, diethylene glycol, triethylene glycol, propylene glycol, dipropylene glycol, 1,3-propanediol, 1,3-butanediol, 1,3-pentanediol, 1,4-butanediol, 1,5-pentanediol, 1,6-hexanediol, 2,3-butanediol, 3-methyl-1,3-butanediol, 3-methyl-1,5-pentanediol, 2-methyl-1,3-propanediol, 2,2-dimethyl-1,3-propanediol, 2-methyl-2,4-pentanediol, trimethylolpropane, glycerine, and the like. It is possible to preferably use multivalent alcohols from the point of view of being able to reduce clogging, discharging failure, and the like by suppressing drying and solidifying ink on a nozzle surface of a head. In a case of containing multivalent alcohols, it is possible for the content thereof to be 2 mass% to 20 mass% with respect to the total mass of ink.

Examples of glycol ethers include alkylene glycol monoether, alkylene glycol diether, and the like.

Examples of alkylene glycol monoethers include ethylene glycol monomethyl ether, ethylene glycol monoethyl ether, ethylene glycol monoisopropyl ether, ethylene glycol monobutyl ether, ethylene glycol monohexyl ether, ethylene glycol monophenyl ether, diethylene glycol monomethyl ether, diethylene glycol monoethyl ether, diethylene glycol monobutyl ether, diethylene glycol monohexyl ether, triethylene glycol monomethyl ether, triethylene glycol monoethyl ether, triethylene glycol monobutyl ether, tetraethylene glycol monomethyl ether, tetraethylene glycol monoethyl ether, propylene glycol monomethyl ether, propylene glycol monoethyl ether, dipropylene glycol monomethyl ether, and dipropylene glycol monoethyl ether.

Examples of alkylene glycol diethers include ethylene glycol dimethyl ether, ethylene glycol diethyl ether, ethylene glycol dibutyl ether, diethylene glycol dimethyl ether, diethylene glycol diethyl ether, diethylene glycol ethyl methyl ether, diethylene glycol dibutyl ether, triethylene glycol dimethyl ether, triethylene glycol diethyl ether, triethylene glycol dibutyl ether, triethylene glycol butyl methyl ether, tetraethylene glycol dimethyl ether, tetraethylene glycol diethyl ether, tetraethylene glycol dibutyl ether, propylene glycol dimethyl ether, propylene glycol diethyl ether, dipropylene glycol dimethyl ether, and dipropylene glycol diethyl ether.

Since glycol ethers are able to suppress the wettability of ink or permeation speed with respect to a recording medium, it is possible to record a clear image. In a case of containing glycol ethers, it is possible for the content to be 0.05 mass% to 6 mass% with respect to the total amount of ink.

### Surfactant

A surfactant is provided with a function of reducing surface tension and improving the wettability with a recording medium. Among surfactants, for example, it is possible to preferably use an acetylene glycol-based surfactant, a silicone-based surfactant, and a fluorine-based surfactant.

The acetylene glycol-based surfactant is not particularly limited; however, examples thereof include Surfynol 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, and DF110D (the above are all product names manufactured by Air Products and Chemicals Inc.), Olfin B, Y, P, A, STG, SPC, E1004, E1010, PD-001, PD-002W, PD-003, PD-004, EXP. 4001, EXP. 4036, EXP. 4051, AF-103, AF-104, AK-02, SK-14, and AE-3 (the above are all product names manufactured by Nissin Chemical Industry Co., Ltd.), Acetylenol E00, E00P, E40, and E100 (the above are all product names, manufactured by Kawaken Fine Chemicals Co., Ltd.).

The silicone-based surfactant is not particularly limited; however, preferable examples thereof include a polysiloxane-based compound. The polysiloxane-based compound is not particularly limited; however, examples thereof include polyether-modified organosiloxane. Commercially available products of the polyether-modified organosiloxane include BYK-306, BYK-307, BYK-333, BYK-341, BYK-345, BYK-346, and BYK-348 (the above are product names manufactured by BYK Corp.), KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (the above are product names manufactured by Shin-Etsu Chemical Co., Ltd.).

A fluorine-modified polymer is preferably used as the fluorine-based surfactant and specific examples thereof include BYK-340 (manufactured by BYK Corp.).

### pH Adjusting Agent

Examples of the pH adjusting agent include potassium dihydrogenphosphate, disodium hydrogenphosphate, sodium hydroxide, lithium hydroxide, potassium hydroxide, ammonia, diethanol amine, triethanol amine, triisopropanol amine, potassium carbonate, sodium carbonate, and sodium bicarbonate.

### Preservative and Antifungal Agent

Examples of a preservative and an antifungal agent include sodium benzoate, pentachlorophenol sodium, 2-pyridinethiol-1-oxide sodium, sodium sorbate, sodium dehydroacetate, and 1,2-dibenzisothiazolin-3-on (PROXEL CRL, PROXEL BND, PROXEL GXL, PROXEL XL-2, and PROXEL TN manufactured by ICI Corp.).

### 2.2.3. Method for Preparing Ink Composition

The ink which is used in the present embodiment is obtained by mixing the components described above in an arbitrary order and removing impurities by carrying out filtration as necessary. As a method for mixing each component, a method of adding material sequentially in a container which is provided with a stirring apparatus such as a mechanical stirrer and a magnetic stirrer and carrying out stirring and mixing is favorably used. As the filtration method, it is possible to perform centrifugal filtration, or filter filtration as necessary.

### 2.2.4. Physical Property of Ink Composition

Regarding the pH of the ink which is used in the present embodiment, from the point of view of the balance between the image quality and the reliability as an ink for ink jet use, the surface tension at 20°C is preferably 20 mN/m to 40 mN/m and more preferably 25 mN/m to 35 mN/m. Here, it is possible to measure the surface tension, for example, by confirming the surface tension when wetting a platinum plate with ink in an environment of 20°C using Automatic surface tensiometer CBVP-Z (product name, manufactured by Kyowa Interface Science Co., Ltd.).

In addition, from the same point of view, the viscosity of the ink according to the present embodiment at 20°C is preferably 3 mPa·s to 10 mPa·s and more preferably 3 mPa·s to 8 mPa·s. Here, it is possible to measure the viscosity, for example, in an environment of 20°C using viscoelastic testing machine MCR-300 (product name, manufactured by Physica Inc.).

### 2.3. Cloth

The fiber which configures a cloth is not particularly limited; however, examples thereof include natural fibers such as silk, cotton, hemp, and wool; synthetic fibers such as polyester fibers, nylon fibers, triacetate fibers, diacetate fibers, and polyamide fibers; and regenerated fibers such as rayon. The cloth may be formed by one type of fiber or two or more types of fibers may be mixed. Among these, in particular, it is easy to obtain the effects of a penetrant using a cloth where fibers with different permeability are mixed. As the cloth, the fibers described above may be made in any form such as a fabric, knitted fabric, or non-woven fabric.

As described above, since the penetrant according to the present embodiment is easily decolored in the cleaning step even when dyeing a cloth, it is not necessary to consider a combination of the cloth and the penetrant and it is possible to use the penetrant with various types of cloths.

### 2.4. Pretreatment Step

In a case of employing an ink jet printing method using the ink composition of the present embodiment with respect to a cloth, pretreatment is preferably carried out on the cloth using a pretreatment agent beforehand in the same manner as for general ink jet printing methods. The pretreatment of the cloth is performed by attaching the pretreatment agent to the cloth by immersing the cloth in the pretreatment agent or by using a means such as coating or spraying the pretreatment agent on the cloth, and then drying the cloth.

The pretreatment agent of the fabric is not particularly limited; however, examples thereof include a pretreatment solution which is an aqueous solution containing a sizing agent such as a water-soluble polymer compound at 0.01 mass% to 20 mass% with respect to the total amount of the pretreatment agent (100 mass%) and an alkali generating agent at 1.0 mass% to 5.0 mass%. The sizing agent described above is not particularly limited; however, examples thereof include starch substances such as corn, and wheat; cellulose-based materials such as carboxymethyl cellulose, and hydroxyethyl cellulose; polysaccharides such as alginate sodium, gum arabic, locust bean gum, tragacanth gum, guar gum, and tamarind seed; proteins such as gelatin and casein; tannins; natural water-soluble polymers such as lignin, synthetic water-soluble polymer compounds such as polyvinyl alcohol-based compounds, polyethylene oxide-based compounds, acrylic acid-based compounds, and maleic anhydride-based compounds. The alkali generating agent described above is not particularly limited; however, examples thereof include sodium hydrogen carbonate and sodium carbonate. As necessary, the pretreatment agent can also contain various additives such as moisturizing agents such as urea and thiourea, pH adjusting agents, reduction inhibitors, penetrants, sequestering agents, and antifoaming agents.

The cloth to which the pretreatment agent is attached is dried, for example, by heating the cloth. The heating temperature at that time is preferably 100°C or more, more preferably 110°C to 200°C, and even more preferably 120°C to 180°C. In addition, the heating time is preferably under 2 minutes. When the heating temperature is 100°C or more, there is a tendency for the fixing property of the penetrant to be favorable. Here, when the heating temperature is 200°C or less, there is a tendency for it to be possible to effectively prevent deterioration of the cloth and deterioration of the penetrant components such as polymers. In addition, the drying means is not limited to the following; however, examples thereof include drying using a hot press machine or an oven.

Next, description will be given of a discharging checking step, a penetrant attaching step, a recording step and a cleaning step in the ink jet printing method according to the present embodiment.

### 2.5. Discharging Checking Step

A discharging checking step is a step of suppressing clogging of nozzles which accompanies drying a penetrant or ink by preliminarily discharging the penetrant from the nozzles of the ink jet head 3 before a penetrant attaching step and a recording step and is separate from these steps. Due to the step, a decrease in the discharging reliability is suppressed and the recording stability is excellent. Here, the preliminary discharging may be called flushing.

The preliminary discharging may be performed onto a cloth which is the recording medium 2 and may also be performed on paper (which is not shown in the diagram) or the flushing box 12 which are provided separately from the recording medium 2. Since the penetrant according to the present embodiment contains the first dye which is represented by Formula (1) described above or the second dye which is represented by Formula (2) described above as a dye, the penetrant colors paper, cloths, and the like. For this reason, it is possible to easily perform a discharging check on the nozzles by visually confirming the coloring.

### 2.6. Recording Step

The recording step of the present embodiment refers to attaching an ink composition to a cloth after the pretreatment step described above. Specifically, the ink composition described above is discharged and attached to the surface (the image forming region) of the dried cloth and forms an image. Here, the discharging conditions may be appropriately determined according to the physical properties of the discharged ink composition. In addition, as the ink composition, it is possible to use a known ink composition used in ink jet printing.

### 2.7. Penetrant Attaching Step

The penetrant attaching step of the present embodiment is a step of attaching the penetrant of the present embodiment to the surface or rear surface of the cloth before, after, or at the same time as the recording step. As a means of attaching the penetrant of the present embodiment, there is an ink jet method.

The penetrant attaching step may be performed before, after, or at the same time of the recording step, or may be performed as a combination thereof. In a case where the penetrant attaching step is performed before the recording step, the recording step is preferably performed before drying the penetrant attached to the cloth. In addition, in a case where the penetrant attaching step is performed after the recording step, it is possible to perform the penetrant attaching step before or after drying the ink composition attached to the cloth, and the penetrant attaching step is preferably performed before drying the ink composition attached to the cloth. Here, the penetrant may be attached to the surface of the cloth, attached to the rear surface, or attached to both the surface and the rear surface.

### 2.8. Heating Step

In the ink jet printing method according to the present embodiment, there may further be a heating step of heating the cloth. Having a heating step makes it possible to more favorably carry out dyeing with the dye on the fabric formed of a cloth. The heating method is not particularly limited and examples thereof include a high temperature steaming method (HT method), a high-pressure steaming method (HP method), and a thermosol method.

Further, in the heating step, the ink composition attachment surface on the cloth may or may not be subjected to a pressure treatment. Examples of a heating method in which the ink composition attachment surface on the cloth is not subjected to a pressure treatment include oven drying (a method in which pressing is not carried out such as a conveyor oven or a batch oven). Having such a heating step further improves the recorded matter productivity. In addition, heating methods in which a pressure treatment is also performed on the ink composition attachment surface on the cloth are not particularly limited and examples thereof include heat pressing and wet-on-dry methods. Here, the "pressure" refers to applying pressure by bringing a solid object into contact with a recording medium.

The temperature during the heating process is preferably 80 to 150°C and more preferably 90 to 110°C. The temperature during the heating process being in the range described above makes it possible to more favorably carry out dyeing with the dye on the fabric formed of a cloth.

### 2.9. Cleaning Step

The ink jet printing method of the present embodiment further has a cleaning step of cleaning the cloth after the heating step. Through the cleaning step, it is possible to effectively remove dye which is included in the penetrant described above or dye which is not dyed in the fibers. It is possible to perform the cleaning step, for example, using water and a soaping treatment may be performed as necessary. The soaping treatment is not particularly limited; however, examples thereof include a method of washing off dye which is not fixed using a heated soap liquid or the like.

In the ink jet printing method according to the present embodiment, it is possible to carry out a discharging check on the nozzles with respect to various types of ink jet printing methods regardless of the type of dye and cloth by using the penetrant according to the present embodiment. In addition, since it is possible to easily wash off the penetrant according to the present embodiment from a cloth in the cleaning step, the color balance of the printed matter which is dyed in the recording step is not lost.

### 3. Examples

Detailed description will be further given below of the invention with Examples and Comparative Examples; however, the invention is not limited to these examples.

### 3.1. Preparation of Penetrant

Before performing various types of evaluation, firstly, a penetrant was prepared. The main material for the penetrant which was used in Examples and Comparative Examples described below is as shown in Table 7 below.

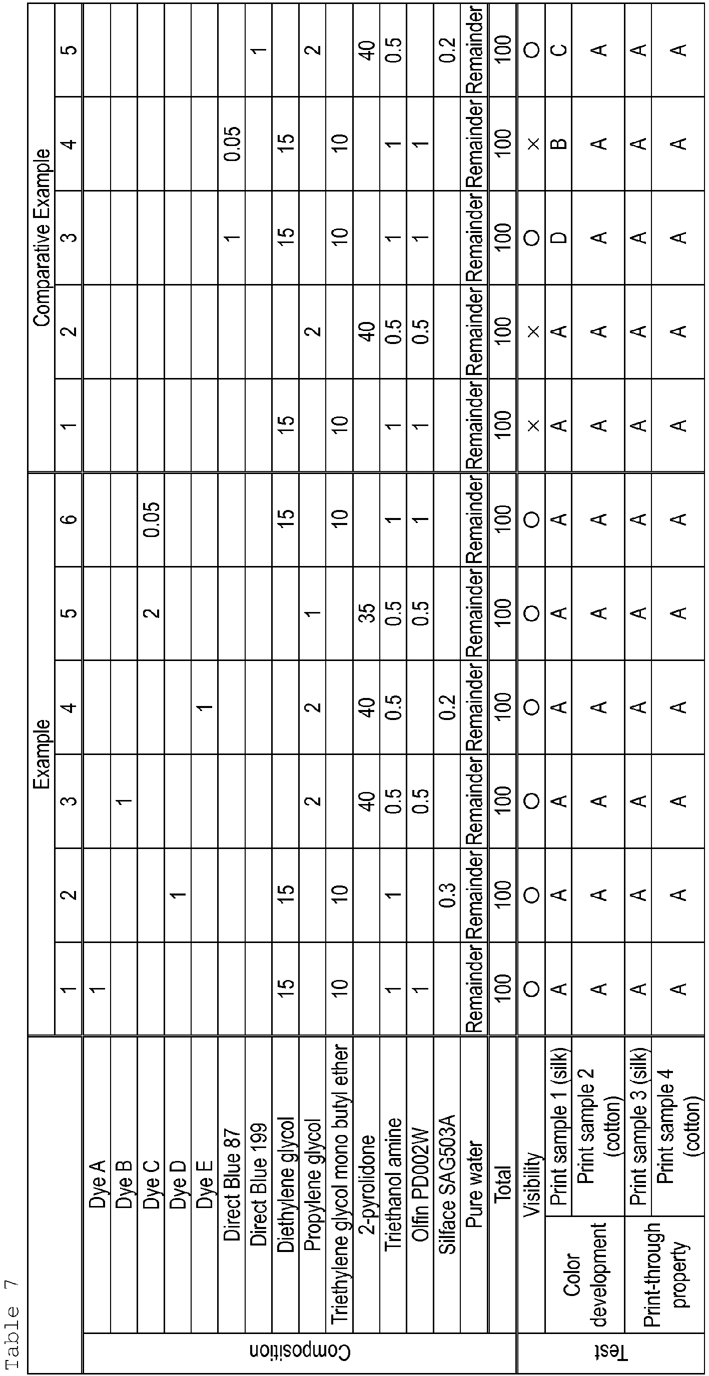

Each ink composition was obtained by mixing and sufficiently stirring each component so as to form the compositions described in Table 7 and further filtering using a membrane filter with a pore diameter of 51 µm. Here, in Table 7, the unit of the numeric values is mass% and the total is 100.0 mass%.

Here, the components which were used in Table 7 are as follows.
Dye A: Compound F in Table 6 described above
Dye B: Compound G in Table 6 described above
Dye C: compound B in Table 5 described above
Dye D: Compound of No. 1 in Table 1 described above
Dye E: Compound of No. 16 in Table 1 described above
C.I. Direct Blue 87
C.I. Direct Black 199
Olfin PD002W (an acetylene glycol-based surfactant, manufactured by Nissin Chemical Industry Co., Ltd.)
Silface SAG503A (a silicone-based surfactant, manufactured by Nissin Chemical Industry Co., Ltd.)

### 3.2. Evaluation Test

### 3.2.1. Visual Test

The ink and the penetrant in the ink cartridge which is positioned at both ends of the main operation direction of the recording head of the ink jet printing apparatus (product name "SP-30160", manufactured by Seiko Epson Corp.) were replaced, a nozzle check pattern was printed on ink jet specialty paper (product name "Super Fine Paper", manufactured by Seiko Epson Corp.), research was carried out on whether it was visually recognizable, and color phase was evaluated according to the evaluation reference described below.

### Evaluation Reference

O: Visual recognition was possible
×: Visual recognition was not possible

### 3.2.2. Color Development Test

### Printing Sample 1

The penetrant was filled in positions at both ends of the recording head of the ink jet printing apparatus described above and solid printing was carried out onto a fabric 1 (silk : product name "SK-PTA", manufactured by FOR. TEX Corp.) at 720 dpi×720 dpi with 4 pass printing. After performing steaming at 100°C for 30 minutes, the resultant was cleaned at 45°C for 15 minutes using a water solution which includes 0.2 mass% of a surfactant (product name "Laccol STA", manufactured by Meisei Chemical Works, Ltd.) and dried to obtain a printing sample 1.

### Printing Sample 2

In the same method as described above, solid printing was carried out onto a cloth 2 (reactive cotton cloth: product name "COT-PTR", manufactured by FOR. TEX Corp.). After performing steaming at 102°C for 12 minutes, the resultant was cleaned at 90°C for 10 minutes using a water solution which includes 0.2 mass% of Laccol STA and dried to obtain a printing sample 2.

Regarding the two types of printing samples described above, the color difference (ΔE (CIE2000) between a non-printed portion and a printed portion was obtained using a spectral densitometer (product name "FD-7", manufactured by Konica Minolta, Inc.)

### Measurement Conditions

Light source: D65, Status: DIN NB, Visual angle: 2 degrees,
UV filter: yes

### Evaluation Reference

A: ΔE<0.5
B: 0.5≤ΔE<1.0
C: 1.0≤ΔE<2.0
D: 2.0≤ΔE

### 3.2.3. Printing Through Test

### Printing Sample 3

Material was mixed and stirred in the composition described in Table 8 below and an ink composition was obtained. In detail, an ink composition 1 was prepared by evenly mixing each material and filtering using a membrane filter (a pore diameter of 1 µm). After that, the penetrant was inserted in a left end of the recording head of the ink jet printing apparatus described above and the ink composition 1 was inserted in the next row thereof and each was overlapped with an ejection amount of 1.9 mg/cm² at 720 dpi×720 dpi and solid printing was performed onto the fabric 1. Steaming and cleaning were performed in the same steps as when producing the printing sample 1 and, after drying the result, a printing sample 3 was obtained.

**Table 8**

| | | |
|---|---|---|
| Pigment | C.I. Acid Black 172 | 10 |
| Organic solvent type | Triethylene glycol mono butyl ether | 5 |
| | Triethylene glycol | 10 |
| | 2-pyrolidone | 5 |
| | Olfin PD002W | 0.5 |
| | Triethanol amine | 0.5 |
| Other | Pure water | Remainder |
| Total (mass%) | | 100 |

### Printing Sample 4

Material was mixed and stirred in the composition described in Table 9 below and an ink composition was obtained. In detail, an ink composition 2 was prepared by evenly mixing each material and filtering using a membrane filter (a pore diameter of 1 µm). The penetrant was inserted in a left end of the recording head of the ink jet printing apparatus described above and the ink composition 2 was inserted in the next row and solid printing was performed onto the fabric 2 in the same steps as described above. Steaming and cleaning were performed in the same steps as when producing the printing sample 2 and after drying the result, a printing sample 4 was obtained.

**Table 9**

| | | |
|---|---|---|
| Pigment | C.I. Reactive Black 39 | 11 |
| | C.I. Reactive Orange 12 | 2.5 |
| | C.I. Reactive Red 3:1 | 1.5 |
| Organic solvent type | Diethylene glycol mono butyl ether | 2.5 |
| | Diethylene glycol | 5 |
| | 2-pyrolidone | 10 |
| | Olfin PD002W | 0.1 |
| | N,N-bis-(2-hydroxy ethyl)-2-amino ethane sulfonate | 0.05 |
| Other | Pure water | Remainder |
| Total (mass%) | | 100 |

Regarding the two types of printing samples described above, the density difference (ΔOD) between the front surface and the rear surface was obtained using a spectral densitometer (FD-7).

### Measurement Conditions

Light source: D65, Status: DIN NB, Visual angle: 2 degrees, UV filter: yes

### Evaluation Reference

A: ΔOD<0.1
B: 0.1≤ΔOD<0.2
C: 0.2≤ΔOD<0.3
D: 0.3≤ΔOD

### 3. 3. Evaluation Results

The results of the evaluation tests described above are as shown in Table 7. In other words, for all Examples, there was no problem with the visibility and a discharging check was possible. In addition, also with respect to any cloth of silk and cotton, dye of the penetrant was washed off by cleaning and color balance of dye was not lost due to ink. Furthermore, a color development difference between the front surface and the rear surface was not seen and it was understood that ink permeated into the rear of the cloth. In contrast to this, visual recognition was not possible in the visual test in Comparative Examples 1 and 2 in which dye was not used. In addition, in the color development test, the results were that color balance of dye was lost with respect to silk in Comparative Examples 3 and 4 and that color balance of dye was lost with respect to cotton in Comparative Example 5. In this manner, in penetrants not included in the ranges of the invention, there was a case of not being washed off by cleaning and the dyeing by the ink being affected. Furthermore, when performing the printing through test without a penetrant, the evaluation in both the printing samples 3 and 4 was D and ink was not permeated to the rear of the cloth and a color development difference between the front surface and the rear surface was seen. In this manner, in a case of using a penetrant which is included in the range of the invention, at the same time as making a discharging check possible, it was understood that color balance of dye was not lost even with respect to a cloth of either silk and cotton and, moreover, ink permeated into the rear of the cloth and had an effect as a penetrant.

The foregoing description has been given by way of example only and it will be appreciated by a person skilled in the art that modifications can be made without departing from the scope of the present invention as defined by the claims.

## Claims

1. Use of a composition as an ink jet printing penetrant in a method for ink jet printing onto cloth, the composition comprising:
a first dye which is represented by Formula (1) described below; or
a second dye which is represented by Formula (2) described below as a dye, 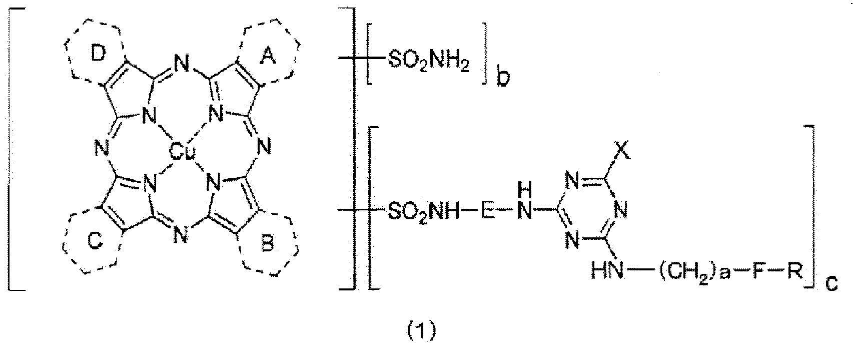 (in Formula (1), rings A to D which are shown by dashed lines each independently represent a 6-membered ring that is either a benzene ring which is condensed in a porphyrazine ring or a nitrogen-containing hetero aromatic ring, a number of nitrogen-containing hetero aromatic rings among rings A to D exceeds 0.00 and is 3.00 or less as an average value in the penetrant, and the remaining rings of rings A to D are benzene rings,
E represents C2 to C12 alkylene,
X is a sulfo anilino group, a carboxyanilino group, a phosphonoanilino group, a sulfonaphthyl amino group, a carboxynaphthyl amino group, or a phosphononaphthyl amino group which may have one type or two or more types of substituents selected from the group formed of a sulfo group, a carboxy group, a phosphoric acid group, a sulfamoyl group, a carbamoyl group, a hydroxy group, a C1 to C6 alkoxy group, an amino group, a mono C1 to C4 alkyl amino group, a di C1 to C4 alkyl amino group, a mono C6 to C10 aryl amino group, a di C6 to C10 aryl amino group, a C1 to C3 alkyl carbonyl amino group, a ureido group, a C1 to C6 alkyl group, a nitro group, a cyano group, a halogen atom, a C1 to C6 alkyl sulfonyl group, and a C1 to C6 alkyl thio group as a substituent,
R represents one of a hydrogen atom, a sulfo group, a carboxy group, a phosphoric acid group, a sulfamoyl group, a carbamoyl group, a hydroxy group, a C1 to C6 alkoxy group, an amino group, a mono C1 to C6 alkyl amino group, a di C1 to C6 alkyl amino group, a mono aryl amino group, a diaryl amino group, a C1 to C3 alkyl carbonyl amino group, a ureido group, a C1 to C6 alkyl group, a nitro group, a cyano group, a halogen atom, a C1 to C6 alkyl sulfonyl group, and an alkyl thio group,
group F represents a phenyl group or a 6-membered nitrogen-containing hetero aromatic ring group,
a represents an integer in the range 1 to 6,
b is 0.00 or more and less than 3.90 as an average value in the penetrant,
c is 0.10 or more and less than 4.00 as an average value in the penetrant, and
a total of b and c is 1.00 or more and less than 4.00 as an average value in the penetrant) 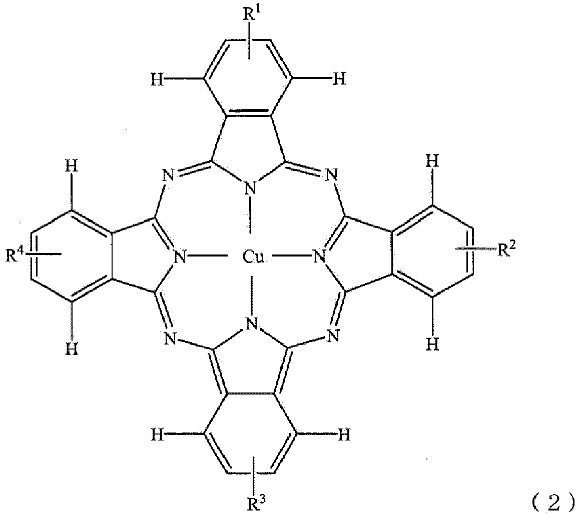
(in Formula (2), R¹ to R⁴ each independently represent SO₂Z, and Z each independently represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group).

2. The use according to claim 1,
wherein, in the first dye which is represented by Formula (1), nitrogen-containing hetero aromatic rings in rings A to D are each independently a pyridine ring which is condensed at a second position and a third position or at a third position and a fourth position or a pyrazine ring which is condensed at a second position and a third position,
E is a straight-chain C2 to C4 alkylene,
X is one of:
a sulfo anilino group which may have 0 to 2 substituents of one type or two types selected from the group formed of a sulfo group, a carboxy group, a hydroxy group, a C1 to C6 alkoxy group, an amino group, a mono C1 to C4 alkyl amino group, a di C1 to C4 alkyl amino group, a C1 to C3 alkyl carbonyl amino group, a nitro group, a halogen atom, a C1 to C6 alkyl sulfonyl group, and an alkyl thio group as a substituent;
a carboxyanilino group which may have 0 to 2 substituents of one type or two types selected from the group formed of a sulfo group, a carboxy group, a hydroxy group, and a sulfamoyl group as a substituent;
a phosphonoanilino group; and
a sulfonaphthyl amino group which may have 0 to 2 substituents of one type or two types selected from the group formed of a sulfo group and a hydroxy group as a substituent,
R is a hydrogen atom, a sulfo group, a carboxy group, a C1 to C6 alkoxy group, a C1 to C6 alkyl group, or a halogen atom,
group F is a phenyl group or a pyridyl group where R is a hydrogen atom, and
a is either 1 or 2.

3. The use according to claim 1,
wherein, in the first dye which is represented by Formula (1), nitrogen-containing hetero aromatic rings in rings A to D are each independently a pyridine ring which is condensed at a second position and a third position,
E is ethylene,
X is a sulfo anilino group which may have 0 or 1 sulfo group as a substituent or a sulfonaphthyl amino group which has 2 sulfo groups as a substituent,
R is a hydrogen atom, a sulfo group, or a carboxy group,
group F is a phenyl group or a pyridyl group where R is a hydrogen atom,
a is 1,
b is 0.00 or more and less than 3.90 as an average value in the penetrant,
c is 0.10 or more and less than 4.00 as an average value in the penetrant, and
a total of b and c is 1.00 or more and less than 4.00 as an average value in the penetrant.

## Patentansprüche

1. Verwendung einer Zusammensetzung als ein Tintenstrahldruckpenetrationsmittel in einem Verfahren zum Tintenstrahldrucken auf Tuch, die Zusammensetzung umfassend:
einen ersten Farbstoff, der durch Formel (1), wie unten beschrieben, dargestellt ist; oder
einen zweiten Farbstoff, der durch Formel (2), wie unten beschrieben, dargestellt ist, als einen Farbstoff, 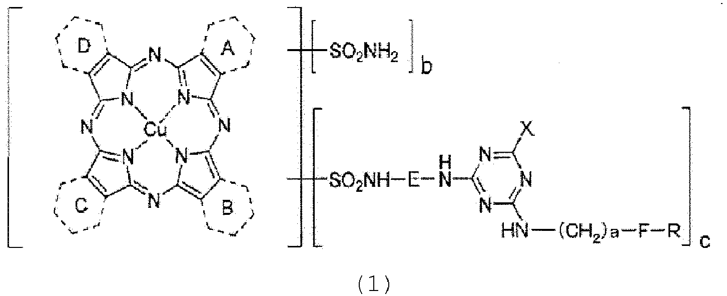
(in Formel (1), Ringe A bis D, die durch gestrichelte Linien dargestellt sind, jeweils unabhängig einen 6-gliedrigen Ring darstellen, der entweder ein Benzolring, der in einem Porphyrazinring kondensiert ist, oder ein stickstoffhaltiger aromatischer Heteroring ist, wobei eine Anzahl von stickstoffhaltigen aromatischen Heteroringen unter Ringen A bis D 0,00 übersteigt und 3,00 oder weniger als Durchschnittswert in dem Penetrationsmittel ist, und die übrigen Ringe von Ringen A bis D Benzolringe sind,
E C2- bis C12-Alkylen darstellt,
X eine Sulfoanilingruppe, eine Carboxyanilingruppe,
eine Phosphonanilingruppe, eine Sulfonaphthylaminogruppe, eine Carboxynaphthylaminogruppe oder eine Phosphonnaphthylaminogruppe ist, die eine Art oder zwei oder mehr Arten von Substituenten, die ausgewählt sind aus der Gruppe, die gebildet ist aus einer Sulfogruppe, einer Carboxygruppe, einer Phosphorsäuregruppe, einer Sulfamoylgruppe, einer Carbamoylgruppe, einer Hydroxygruppe, einer C1- bis C6-Alkoxygruppe, einer Aminogruppe, einer Mono-C1-bis C4-Alkylaminogruppe, einer Di-C1-bis C4-Alkylaminogruppe, einer Mono-C6-bis C10-Arylaminogruppe, einer Di-C6- bis C10-Arylaminogruppe, einer C1- bis C3-Alkylcarbonylamino gruppe, einer Ureidogruppe, einer C1- bis C6-Alkylgruppe, einer Nitrogruppe, einer Cyanogruppe, einem Halogenatom, einer C1- bis C6-Alkylsulfonylgruppe und einer C1- bis C6-Alkylthiogruppe, als einen Substituenten haben kann,
R eines von einem Wasserstoffatom, einer Sulfogruppe, einer Carboxygruppe, einer Phosphorsäuregruppe, einer Sulfamoylgruppe, einer Carbamoylgruppe, einer Hydroxygruppe, einer C1- bis C6-Alkoxygruppe, einer Aminogruppe, einer Mono-C1- bis C6-Alkylaminogruppe, einer Di-C1- bis C6-Alkylaminogruppe, einer Monoarylaminogruppe, einer Diarylaminogruppe, einer C1-bis C3-Alkylcarbonylaminogruppe, einer Ureidogruppe, einer C1- bis C6-Alkylgruppe, einer Nitrogruppe, einer Cyanogruppe, einem Halogenatom, einer C1- bis C6-Alkylsulfonylgruppe und einer Alkylthiogruppe darstellt,
Gruppe F eine Phenylgruppe oder eine 6-gliedrige stickstoffhaltige aromatische Heteroringgruppe darstellt,
a eine ganze Zahl im Bereich von 1 bis 6 darstellt,
b 0,00 oder mehr und weniger als 3,90 als ein Durchschnittswert im Penetrationsmittel ist,
c 0,10 oder mehr und weniger als 4,00 als ein Durchschnittswert im Penetrationsmittel ist und
eine Summe von b und c 1,00 oder mehr und weniger als 4,00 als ein Durchschnittswert im Penetrationsmittel ist), 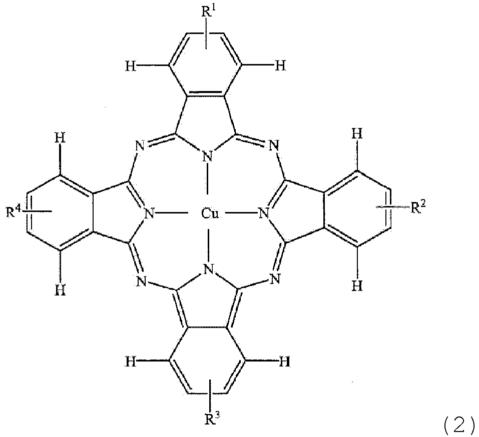
(in Formel 2), R¹ bis R⁴ jeweils unabhängig SO₂Z darstellt und Z jeweils unabhängig eine substituierte oder unsubstituierte Alkylgruppe, eine substituierte oder unsubstituierte Cycloalkylgruppe, eine substituierte oder unsubstituierte Alkenylgruppe, eine substituierte oder unsubstituierte Aralkylgruppe, eine substituierte oder unsubstituierte Arylgruppe oder eine substituierte oder unsubstituierte Heterocyclicgruppe darstellt).

2. Verwendung nach Anspruch 1,
wobei im ersten Farbstoff, der durch Formel (1) dargestellt ist, stickstoffhaltige aromatische Heteroringe in Ringen A bis D jeweils unabhängig ein Pyridinring, der an einer zweiten Position und einer dritten Position oder an einer dritten Position und einer vierten Position kondensiert ist, oder ein Pyrazinring, der an einer zweiten Position und einer dritten Position kondensiert ist, sind,
E ein geradkettiges C2- bis C4- Alkylen ist,
X eines ist von:
einer Sulfoanilinogruppe, die 0 bis 2 Substituenten von einer Art oder von zwei Arten, ausgewählt aus der Gruppe, gebildet aus einer Sulfogruppe, einer Carboxygruppe, einer Hydroxygruppe, einer C1- bis C6-Alkoxygruppe, einer Aminogruppe, einer Mono-C1- bis C4-Alkylaminogruppe, einer Di-C1- bis C4-Alkylaminogruppe, einer C1- bis C3-Alkylcarbonylaminogruppe, einer Nitrogruppe, einem Halogenatom, einer C1- bis C6-Alkylsulfonylgruppe und einer Alkylthiogruppe als einen Substituenten haben kann;
einer Carboxyanilinogruppe, die 0 bis 2 Substituenten von einer Art oder von zwei Arten, ausgewählt aus der Gruppe, gebildet aus einer Sulfogruppe, einer Carboxygruppe, einer Hydroxygruppe und einer Sulfamoylgruppe als einen Substituenten haben kann;
einer Phosphonanilingruppe; und
einer Sulfonaphthylaminogruppe, die 0 bis 2 Substituenten von einer Art oder zwei Arten, ausgewählt aus der Gruppe, gebildet aus einer Sulfogruppe und einer Hydroxygruppe als einen Substituent haben kann,
R ein Wasserstoffatom, eine Sulfogruppe, eine Carboxygruppe, eine C1- bis C6-Alkoxygruppe, eine C1-bis C6-Alkylgruppe, oder ein Halogenatom ist,
Gruppe F eine Phenylgruppe oder eine Pyridylgruppe ist, wo R ein Wasserstoffatom ist, und
a entweder 1 oder 2 ist.

3. Verwendung nach Anspruch 1,
wobei im ersten Farbstoff, der durch Formel (1) dargestellt ist, stickstoffhaltige, aromatische Heteroringen in Ringen A bis D jeweils unabhängig ein Pyridinring sind, der an einer zweiten Position und einer dritten Position kondensiert ist,
E Ethylen ist,
X eine Sulfoanilingruppe, die 0 bis 1 Sulfogruppe als einen Substituenten haben kann, oder eine Sulonaphthylgruppe ist, die 2 Sulfogruppen als einen Substituenten hat,
R ein Wasserstoffatom, eine Sulfogruppe oder eine Carboxygruppe ist,
Gruppe F eine Phenylgruppe oder eine Pyridylgruppe ist, wo R ein Wasserstoffatom ist,
a 1 ist
b 0,00 oder mehr und weniger als 3,90 als ein Durchschnittswert im Penetrationsmittel ist,
c 0,10 oder mehr und weniger als 4,00 als ein Durchschnittswert im Penetrationsmittel ist und eine Summe von b und c 1,00 oder mehr und weniger als 4,00 als ein Durchschnittswert im Penetrationsmittel ist.

## Revendications

1. Utilisation d'une composition en tant que pénétrant d'impression par jet d'encre selon un procédé permettant l'impression par jet d'encre sur un tissu, la composition comprenant :
un premier colorant qui est représenté par la formule (1) décrite ci-dessous ; ou
un second colorant qui est représenté par la formule (2) décrite ci-dessous en tant que colorant, 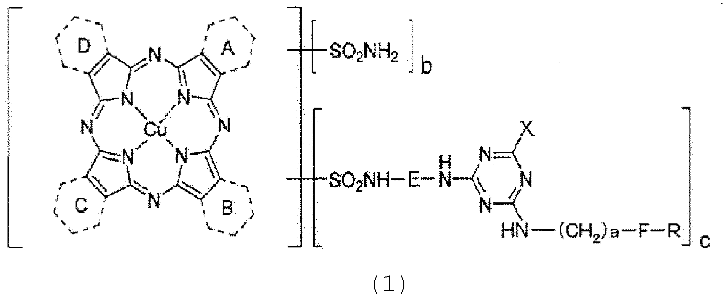
(dans la formule (1), les noyaux A à D qui sont indiqués par des lignes pointillées représentent chacun indépendamment un noyau à 6 chaînons qui est soit un noyau benzène qui est condensé dans un noyau porphydrazine ou un noyau hétéroaromatique contenant de l'azote, un certain nombre de noyaux hétéroaromatiques contenant de l'azote parmi les noyaux A à D sont supérieurs à 0,00 et inférieurs ou égaux à 3,00 comme valeur moyenne dans l'agent pénétrant, et les noyaux restant parmi les noyaux A à D sont des noyaux benzène,
E représente un alkylène en C2 à C12,
X représente un groupe sulfo anilino, un groupe carboxyanilino, un groupe phosphonoanilino, un groupe sulfonaphtyle amino, un groupe carboxynaphtyle amino ou un groupe phosphononaphtyle amino qui peuvent avoir un type ou au moins deux types de substituants choisis dans le groupe formé d'un groupe sulfo, d'un groupe carboxy, d'un groupe acide phosphorique, d'un groupe sulfamoyle, d'un groupe carbamoyle, d'un groupe hydroxy, d'un groupe alcoxy en C1 à C6, d'un groupe amino, d'un groupe monoalkyle amino en C1 à C4, d'un groupe dialkyle amino en C1 à C4, d'un groupe monoaryle amino en C6 à C10, d'un groupe diaryl amino en C6 à C10, d'un groupe alkyl carbonyl amino en C1 à C3, d'un groupe uréido, d'un groupe alkyle en C1 à C6, d'un groupe nitro, d'un groupe cyano, d'un atome d'halogène, d'un groupe alkyl sulfonyle en C1 à C6 et d'un groupe alkyl thiol en C1 à C6 en tant que substituant,
R représente un groupe parmi un atome d'hydrogène, un groupe sulfo, un groupe carboxy, un groupe acide phosphorique, un groupe sulfamoyle, un groupe carbamoyle, un groupe hydroxy, un groupe alcoxy en C1 à C6, un groupe amino, un groupe monoalkyle amino en C1 à C6, un groupe dialkyle amino en C1 à C6, un groupe monoaryle amino, un groupe diaryl amino, un groupe alkyl carbonyl amino en C1 à C3, un groupe uréido, un groupe alkyle en C1 à C6, un groupe nitro, un groupe cyano, un atome d'halogène, un groupe alkyl sulfonyle en C1 à C6 et un groupe alkyl thiol,
le groupe F représente un groupe phényle ou un groupe cyclique hétéroatomique contenant de l'azote à 6 chaînons,
a représente un nombre entier valant entre 1 et 6,
b est supérieur ou égal à 0,00 et inférieur ou égal à 3,90 en tant que valeur moyenne dans l'agent pénétrant, c est supérieur ou égal à 0,10 et inférieur ou égal à 4,00 en tant que valeur moyenne dans l'agent pénétrant, et
une valeur totale de b et c est supérieure à 1,00 et inférieure à 4,0 en tant que valeur moyenne dans l'agent pénétrant) 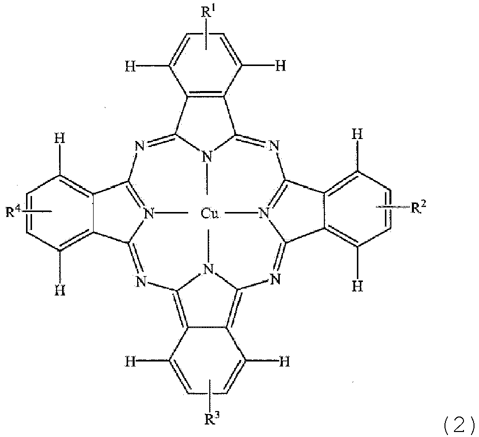
(dans la formule (2), R¹ à R⁴ représentent chacun indépendamment SO₂Z, et Z représente chacun indépendamment un groupe alkyle substitué ou non substitué, un groupe cycloalkyle substitué ou non substitué, un groupe alcényle substitué ou non substitué, un groupe aralkyle substitué ou non substitué, un groupe aryle substitué ou non substitué, ou un groupe hétérocyclique substitué ou non substitué).

2. Utilisation selon la revendication 1,
dans laquelle, dans le premier colorant qui est représenté par la formule (1), les noyaux hétéroaromatiques contenant de l'azote dans les noyaux A à D représentent chacun indépendamment un noyau pyridine qui est condensé au niveau d'une deuxième position et d'une troisième position ou au niveau d'une troisième position et d'une quatrième position en un noyau pyridine qui est condensé au niveau d'une deuxième position et d'une troisième position,
E représente un alkylène en C2 à C4 à chaîne linéaire,
X est un groupe parmi :
un groupe sulfo anilino qui peut comprendre entre 0 et 2 substituants d'un type ou de deux types choisis dans le groupe formé d'un groupe sulfo, d'un groupe carboxy, d'un groupe hydroxy, d'un groupe alcoxy en C1 à C6, d'un groupe amino, d'un groupe mono alkyl amino en C1 à C4, d'un groupe alkyl amino en C1 à C4, d'un groupe alkyl carbonyl amino en C1 à C3, d'un groupe nitro, d'un atome d'halogène, d'un groupe alkyl sulfonyle en C1 à C6 et d'un groupe alkyl thio en tant que substituant ;
un groupe carboxyanilino qui peut comprendre entre 0 et 2 substituants d'un type ou de deux types choisis dans le groupe formé d'un groupe sulfo, d'un groupe carboxy, d'un groupe hydroxy et d'un groupe sulfamoyle en tant que substituant ;
un groupe phosphoanilino ; et
un groupe sulfonaphtyl amino qui peut comprendre entre 0 et 2 substituants d'un type ou de deux types choisis dans le groupe formé d'un groupe sulfo et d'un groupe hydroxy en tant que substituant,
R représente un atome d'hydrogène, un groupe sulfo, un groupe carboxy, un groupe alcoxy en C1 à C6, un groupe alkyle en C1 à C6 ou un atome d'halogène,
le groupe F est un groupe phényle ou un groupe pyridyle où R représente un atome d'hydrogène, et
a vaut 1 ou 2.

3. Utilisation selon la revendication 1,
dans laquelle, dans le premier colorant qui est représenté par la formule (1), les noyaux hétéroaromatiques contenant de l'azote dans les noyaux A à D représentent chacun indépendamment un noyau pyridine qui est condensé au niveau d'une deuxième position et d'une troisième position,
E représente l'éthylène,
X est un groupe sulfo anilino qui peut comprendre 0 ou 1 groupe sulfo en tant que substituant ou un groupe sulfonaphtyl amino qui a deux groupes sulfo en tant que substituant,
R représente un atome d'hydrogène, un groupe sulfo, ou un groupe carboxy,
le groupe F est un groupe phényle ou un groupe pyridyle où R représente un atome d'hydrogène,
a vaut 1,
b est supérieur ou égal à 0,00 et inférieur ou égal à 3,90 en tant que valeur moyenne dans l'agent pénétrant,
c est supérieur ou égal à 0,10 et inférieur ou égal à 4,00 en tant que valeur moyenne dans l'agent pénétrant, et
une valeur totale de b et c est supérieure à 1,00 et inférieure à 4,0 en tant que valeur moyenne dans l'agent pénétrant.
